# EUROPEAN PATENT APPLICATION

(11) **EP 3 995 351 A1**
(43) Date of publication of application: **11.05.2022**
(21) Application number: 21206170.9
(22) Date of filing: 03.11.2021
(51) Int. Cl.: B60L 53/12, B60L 55/00, B60L 58/12

(54) **DEVICE AND PROGRAM FOR PREDICTION OF VEHICLE STATE REGARDING DISCHARGE OF POWER TO THE GRID**

(30) Priority: 05.11.2020 JP 2020184936
(71) Applicant: TOYOTA JIDOSHA KABUSHIKI KAISHA, Toyota-shi, Aichi-ken, 471-8571 (JP)
(72) Inventor: KIGURE, Hiromitsu, Toyota-shi, 471-8571 (JP)
(74) Representative: D Young & Co LLP

(57) **Abstract**

A device for prediction of a vehicle state predicting whether a vehicle will enter a vehicle state able to transfer electric power with the outside, in which a vehicle state prediction model trained so that if inputting at least three pieces of information including the position information of the vehicle, information relating to the weather, and information relating to the date and time, a result of prediction of whether the vehicle will enter a vehicle state able to transfer electric power with the outside is output is stored. Whether the vehicle will enter a vehicle state able to transfer electric power with the outside is predicted by inputting the position information of the vehicle, information relating to the weather, and information relating to the date and time into the vehicle state prediction model.

## Description

### FIELD

The present invention relates to a device for prediction of a vehicle state and a program.

### BACKGROUND

Known in the art is an electric power system using a neural network to predict a total amount of electric power, a maximum amount of electric power demand, and a total amount of electric power demand of a next day at an individual electric power selling consumer, judge whether a shortage of electric power will arise or an excess of electric power will arise at the electric power selling consumer based on the predicted data relating these total amount of electric power, the maximum amount of electric power demand, and the total amount of electric power demand of the next day, and control supply and demand of the electric power so as to receive electric power from another electric power selling consumer provided with a power generating device or power storage device if a shortage of electric power will arise at the electric power selling consumer and transfer electric power to another electric power selling consumer if an excess of electric power will arise at the electric power selling consumer (for example, see WO2008/117392).

### SUMMARY

In this regard, if incorporating a vehicle able to transfer electric power with the outside into such an electric power system and trying to transfer electric power between the vehicle and the outside, a need arises to predict whether the vehicle will enter a vehicle state able to transfer electric power with the outside. However, the above electric power system does not suggest at all predicting if a vehicle will enter a vehicle state able to transfer electric power with the outside.

The present invention, in consideration of such a situation, is to provide a device for prediction of a vehicle state and a program which are able to predict whether a vehicle will enter a vehicle state able to transfer electric power with the outside.

According to the present invention, there is provided a device for prediction of a vehicle state predicting whether a vehicle will enter a vehicle state able to transfer electric power with an outside,
a vehicle state prediction model trained so that if at least three pieces of information including position information of the vehicle, information relating to weather, and information relating to a date and time are inputted, a result of prediction of whether the vehicle will enter a vehicle state able to transfer electric power with the outside is output is stored, and
whether the vehicle will enter a vehicle state able to transfer electric power with the outside is predicted by inputting the above mentioned at least three pieces of information into the vehicle state prediction model.

Furthermore, according to the present invention, there is provided a program that causes a computer to:
acquire at least three pieces of information including position information of the vehicle, information relating to weather, and information relating to a date and time,
input the acquired at least three pieces of information into a vehicle state prediction model trained so that if the above mentioned at least three pieces of information are input, a result of prediction of whether the vehicle will enter a vehicle state able to transfer electric power with the outside is output, and
output a result of prediction of whether the vehicle will enter a vehicle state able to transfer electric power with the outside from the vehicle state prediction model.

According to the present invention, it is possible to suitably predict if a vehicle will enter a vehicle state able to transfer electric power with the outside.

### BRIEF DESCRIPTION OF DRAWINGS

FIG. 1 is an overall view of a schematically shown vehicle etc.
FIG. 2A and FIG. 2B are views of the configuration of a vehicle drive nuit.
FIG. 3 are views for explaining an SOC amount.
FIG. 4 is a flow chart for performing charging control.
FIG. 5 is a flow chart for performing charging control.
FIG. 6 is a view for explaining an electric power brokerage system.
FIG. 7 is a view showing one example of results of prediction by a prediction model.
FIG. 8 is a table of factor parameters and stored data etc.
FIG. 9 is a table of factor parameters and stored data etc.
FIG. 10 is a flow chart for storing data.
FIG. 11 is a flow chart for acquiring a parked position of a host vehicle.
FIG. 12 is a view showing a neural network.
FIG. 13 is a view showing a table of states of the vehicle and output values.
FIG. 14 is a view showing a training data set.
FIG. 15 is a flow chart for preparing a training data set.
FIG. 16 is a flow chart for preparing a training data set.
FIG. 17 is a flow chart for preparing a training data set.
FIG. 18 is a flow chart for preparing a training data set.
FIG. 19 is a view showing a neural network.
FIG. 20 is a view showing one example of results of prediction by a prediction model.
FIG. 21 is a view showing a training data set.
FIG. 22 is a flow chart for preparing a training data set.
FIG. 23 is a flow chart for generating a prediction model.
FIG. 24 is a flow chart for performing communication processing.
FIG. 25 is a flow chart for selecting a best technique.

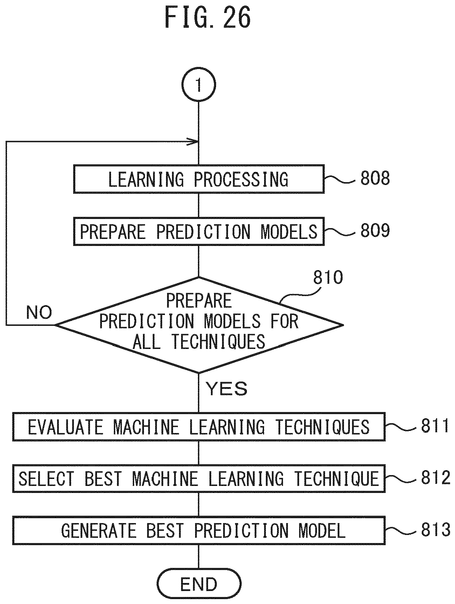

FIG. 26 is a flow chart for selecting a best technique.
FIG. 27 is a view showing one example of results of prediction by a prediction model.
FIG. 28 is a view showing a training data set.
FIG. 29 is a flow chart for generating a prediction model.
FIG. 30 is a flow chart for generating a prediction model.

### DESCRIPTION OF EMBODIMENTS

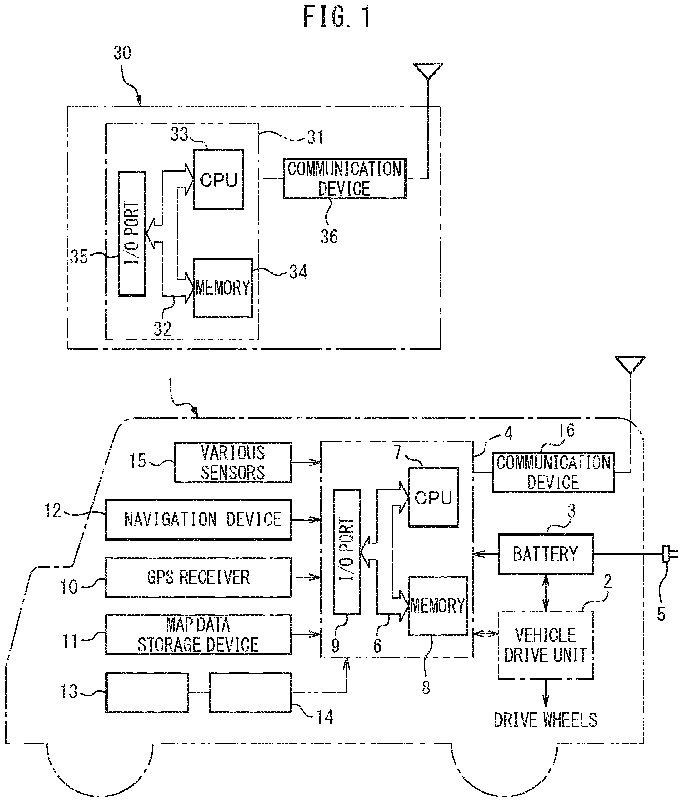

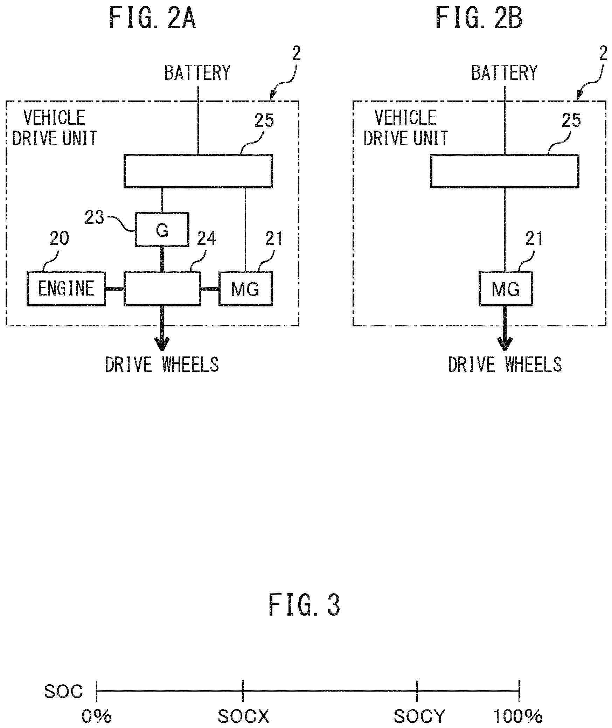

First, referring to FIG. 1, a vehicle able to transfer electric power with the outside will be explained. Referring to FIG. 1, 1 is an EV vehicle driven by only an electric motor or a plug-in hybrid (PHV) vehicle driven by both of an electric motor and internal combustion engine. Further, in FIG. 1, 2 is a vehicle drive nuit for imparting drive force to drive wheels, 3 is a battery, and 4 is an electronic control unit mounted in the vehicle 1. The battery 3 transfers electric power between the battery 3 and the outside through a plug 5. On the other hand, the electronic control unit 4, as shown in FIG. 1, is comprised of a digital computer and is provided with a CPU (microprocessor) 7, a memory 8 comprised of a ROM and RAM, and an input/output port 9, which are connected with each other by a bidirectional bus 6.

Further, inside the vehicle 1, a GPS (global positioning system) receiver 10 for receiving radio waves from artificial satellites to detect a current position of the vehicle 1, a map data storage device 11 storing map data etc., a navigation device 12, and an operating device 14 provided with a display screen 13 are mounted. Further, inside the vehicle 1, an accelerator opening degree sensor, engine speed sensor, vehicle speed sensor, atmospheric temperature sensor, and various other sensors 15 are mounted. These GPS receiver 10, map data storage device 11, navigation device 12, operating device 14, and various sensors 15 are connected to the electronic control unit 4.

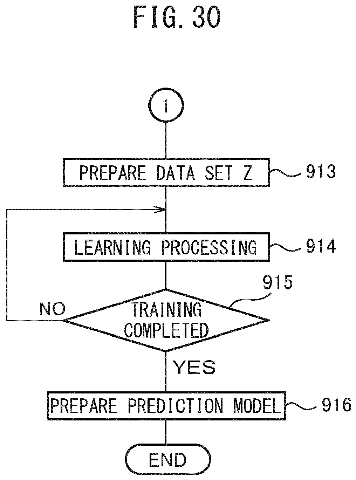

On the other hand, in FIG. 1, 30 shows a server. As shown in FIG. 1, inside this server 30, an electronic control unit 31 is set. This electronic control unit 31 is comprised of a digital computer and is provided with a CPU (microprocessor) 33, a memory 34 comprised of a ROM and RAM, and an input/output port 35, which are connected with each other by a bidirectional bus 32. Furthermore, inside the server 30, a communication device 36 for communicating with the vehicle 1 is set. On the other hand, in the vehicle 1, a communication device 16 for communicating with the server 30 is mounted.

FIG. 2A and FIG. 2B are views of the configuration of the vehicle drive unit 2 shown in FIG. 1 and respectively show a typical plug-in hybrid system and EV system. These systems are well known, so will be explained only very briefly. First, referring to FIG. 2A, the vehicle drive nuit 2 is provided with an internal combustion engine 20, an electric motor 21, a generator 23, a power split mechanism 24 comprised of for example a planetary gear mechanism, and a motor control device 25. The electric motor 21 performs the role of a generator, so usually is called a "motor-generator". For example, during low speed driving, the vehicle 1 is driven by the electric motor 21. At this time, electric power is supplied to the electric motor 21 from the battery 3 through the motor control device 25 and the output of the electric motor 21 is transmitted to the drive wheels by the power split mechanism 24.

On the other hand, at the time of medium speed driving, the vehicle 1 is driven by the internal combustion engine 20 and electric motor 21. At this time, on the one hand, a part of the output of the internal combustion engine 20 is transmitted by the power split mechanism 24 to the drive wheels, while, on the other hand, the generator 23 is driven by a part of the output of the internal combustion engine 20 , the electric motor 21 is driven by the generated power of the generator 23, and the output of the electric motor 21 is transmitted to the drive wheels by the power split mechanism 24. Further, at the time of braking of the vehicle 1, the regenerative control in which the electric motor 21 functions as a generator and the battery 3 is charged by the generated power of the electric motor 21 is performed. Further, if the amount of charge of the battery 3 falls, the generator 23 is driven by the internal combustion engine 20 through the power split mechanism 24, and the battery 3 is charged by the generated power of the generator 23.

Next, referring to FIG. 2B, the vehicle drive nuit 2 is provided with an electric motor 21 and a motor control device 25. In the EV system shown in FIG. 2B as well, the electric motor 21 performs the role of a generator, so usually is called a "motor-generator". In this EV system, the vehicle 1 is constantly driven by the electric motor 21. In the hybrid system shown in FIG. 2A, the internal combustion engine 20 and the power split mechanism 24 are controlled by output signals of the electronic control unit 4, while the electric motor 21 and the generator 23 are controlled by the motor control device 25 based on the output signals of the electronic control unit 4. On the other hand, in the EV system shown in FIG. 2B, the electric motor 21 is controlled by the motor control device 25 based on output signals of the electronic control unit 4.

FIG. 3 shows an SOC (state of charge) amount representing the amount of charge of the battery 3. In FIG. 3, when the amount of charge of the battery 3 is a full charge, the SOC amount becomes 100%, while when the amount of charge of the battery 3 is zero, the SOC amount becomes 0%. Further, in the plug-in hybrid system shown in FIG. 2A, for example, if the SOC amount falls to a preset lower limit value SOCX, until the SOC amount rises to a preset upper limit value SOCY, the generator 23 is driven by the internal combustion engine 20 and the charging action of the battery 3 is performed by the generated electric power of the generator 23. On the other hand, in the EV system shown in FIG. 2B, for example, if the SOC amount falls to the preset lower limit value SOCX, a command to charge the battery 3 is issued. Note that, below, this SOC amount will sometimes be referred to simply as the "SOC". Note that, the amount of outflow/inflow of current from and to the battery 3 and output voltage of the battery 3 are continuously being detected, and the SOC amount is calculated in the electronic control unit 4 based on the detected amount of outflow/inflow of current from and to the battery 3.

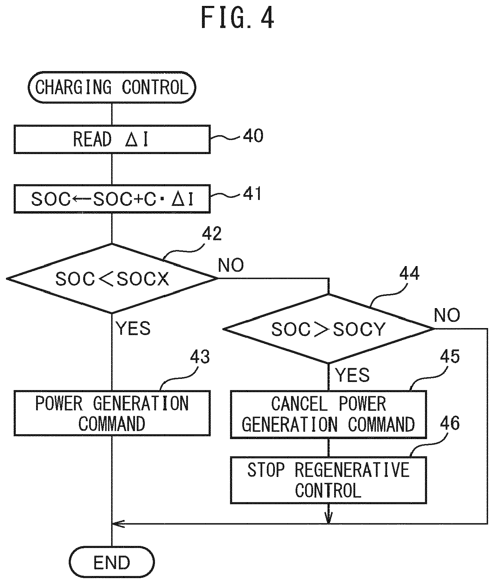

FIG. 4 shows a charging control routine of the battery 3 performed in the electronic control unit 4 if the vehicle 1 mounts the plug-in hybrid system shown in FIG. 2A. This charging control routine is performed by interruption every fixed time period.

Referring to FIG. 4, first, at step 40, an amount of inflow of current ΔI to the battery 3 in the fixed time period is read. Next, at step 41, a product of the amount of inflow of current ΔI to the battery 3 in the fixed time period and a constant C is added to the SOC amount SOC. Note that, when current flows out from the battery 3, the amount of inflow of current ΔI becomes a minus value. Note that, the method of calculation of the SOC amount SOC only shows an extremely simple example. Various known methods of calculation of the SOC amount SOC can be used.

Next, at step 42, it is judged if the SOC amount SOC falls below the preset lower limit value SOCX. When it is judged that the SOC amount SOC falls below the preset lower limit value SOCX, the routine proceeds to step 43 where a power generation command is issued. If the power generation command is issued, the generator 23 is driven by the internal combustion engine 20 and the charging action of the battery 3 is performed by the generated electric power of the generator 23. On the other hand, when at step 42 it is judged that the SOC amount SOC does not fall below the preset lower limit value SOCX, the routine proceeds to step 44 where it is judged if the SOC amount SOC exceeds the preset upper limit value SOCY. When it is judged that the SOC amount SOC exceeds the preset upper limit value SOCY, the routine proceeds to step 45 where the power generation command is cancelled. If the power generation command is cancelled, the generator 23 stops being driven by the internal combustion engine 20 and the charging action of the battery 3 is stopped. Next, at step 46, the regenerative control is stopped.

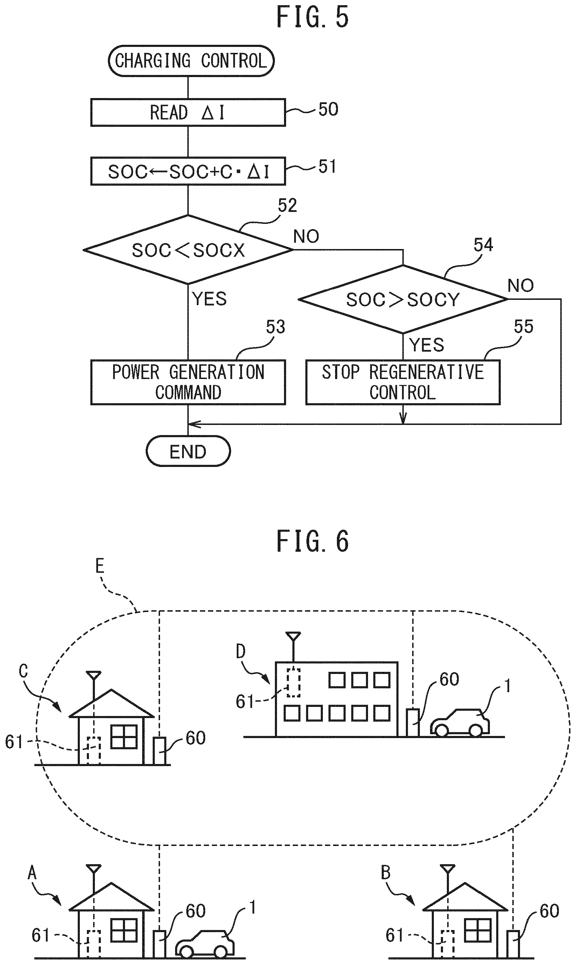

FIG. 5 shows a charging control routine of the battery 3 performed by the electronic control unit 4 if the vehicle 1 mounts the EV system shown in FIG. 2B. This charging control routine is performed by interruption every fixed time period. Note that, steps 50, 51, 52, and 54 of FIG. 5 respectively are the same as steps 40, 41, 42, and 44 of FIG. 4. That is, if referring to FIG. 5, first, at step 50, the amount of inflow of current ΔI to the battery 3 in the fixed time period is read. Next, at step 51, the product of the amount of inflow of current ΔI to the battery 3 in the fixed time period and the constant C is added to the SOC amount SOC. Next, at step 52, it is judged if the SOC amount SOC falls below the preset lower limit value SOCX. When it is judged that the SOC amount SOC falls below the preset lower limit value SOCX, the routine proceeds to step 53 where a command for charging the battery 3 is issued. On the other hand, if at step 52 it is judged that the SOC amount SOC does not fall below the preset lower limit value SOCX, the routine proceeds to step 54 where it is judged if the SOC amount SOC exceeds the preset upper limit value SOCY. When it is judged that the SOC amount SOC exceeds the preset upper limit value SOCY, the routine proceeds to step 55 where the regenerative control is stopped.

Next, referring to FIG. 6, an outline of a P2P (peer to peer) power brokerage system enabling electric power to be traded among individuals using the vehicle 1 able to transfer electric power with the outside, that is, the vehicle 1 mounting the plug-in hybrid system shown in FIG. 2A or the vehicle 1 mounting the EV system shown in FIG. 2B, will be simply explained. Note that, in FIG. 6, "A", "B", and "C" respectively show personal residences, while D shows a workplace where a resident of the personal residence A works. Further, in FIG. 6, E shows an electric power supply and demand line. The personal residences A, B, and C and the workplace D respectively have electric power supply and demand control devices 60 performing electric power transfer control through the electric power supply and demand line E and electric power transfer control with the vehicle 1. The electric power supply and demand control devices 60 sometimes have solar panels or other such generators or power storage devices connected to them. Further, the personal residences A, B, and C and workplace D respectively have communication devices 61 installed for communicating with the server 30 (FIG. 1).

Now then, when the battery 3 mounted in the vehicle 1 stores excess electric power, to promote efficient utilization of this excess electric power, it is preferable that this excess electric power can be sold to another person requiring electric power. In this case, in the P2P power brokerage system, when, on a brokerage market on the Internet, the amount of electric power desired to be sold and the sales price proposed from a person desiring to sell electric power match with the amount of electric power desired to be bought and the purchase price proposed from a person desiring to buy electric power, a sales transaction of the electric power is established. If a sales transaction of the electric power is established, the electric power is transferred from the vehicle 1 of the person desiring to sell electric power to the person desiring to buy electric power or the electric power is transferred from the person desiring to sell electric power to the vehicle 1 of the person desiring to buy electric power and payment is transferred from the person desiring to buy electric power to the person desiring to sell electric power.

In this regard, in this case, in order for electric power to be transferred from the vehicle 1 of a person desiring to sell electric power to another person desiring to buy electric power or in order for electric power to be transferred from another person desiring to sell electric power to the vehicle 1 of a person desiring to buy electric power, it is demanded that the vehicle 1 of the person desiring to transfer electric power be in a vehicle state able to transfer electric power, that is, a vehicle state able to transfer electric power with the outside, therefore a person desiring to transfer electric power must predict when the host vehicle 1 will enter a state able to transfer electric power with the outside. That is, when the host vehicle 1 is being driven, it cannot transfer electric power with another person, so it becomes necessary to predict when the host vehicle 1 will not be driven. Further, even when the host vehicle 1 is not being driven, it is necessary to change the brokerage market on the Internet in accordance with the parked location of the host vehicle 1, so it is necessary to not only predict if the host vehicle 1 will be driven, but also to predict where the host vehicle 1 will be parked.

For example, in FIG. 6, if mentioning as an example the case where a resident of the personal residence A transfers electric power with the outside by using the host vehicle 1, while the host vehicle 1 is moving between the personal residence A, that is, home, and the workplace D, the resident cannot transfer electric power between the host vehicle 1 and the outside. The resident can transfer electric power between the host vehicle 1 and the outside when the host vehicle 1 will be parked at home where the electric power supply and demand control device 60 is set or when it will be parked at the workplace D where the electric power supply and demand control device 60 is set. Therefore, in this case, it is necessary to predict if the host vehicle 1 will be moving between the home and workplace, if it will be parked at home, or if it will be parked at the workplace. Further, in this case, to determine the amount of electric power desired to be sold or the amount of electric power desired to be bought, it is preferable to predict about how much electric power will be consumed when the host vehicle 1 moves between the home and workplace.

Therefore, in one embodiment according to the present invention, a prediction model predicting if the host vehicle 1 will be moving between the home and workplace, will be parked at home, or will be parked at the workplace and a prediction model predicting how much electric power will be consumed if the host vehicle 1 will be moving between the home and workplace are generated. Based on these prediction models, whether the host vehicle 1 will be moving between the home and workplace, will be parked at home, or will be parked at the workplace is predicted and, further, about how much electric power will be consumed when the host vehicle 1 will be moving between the home and workplace is predicted.

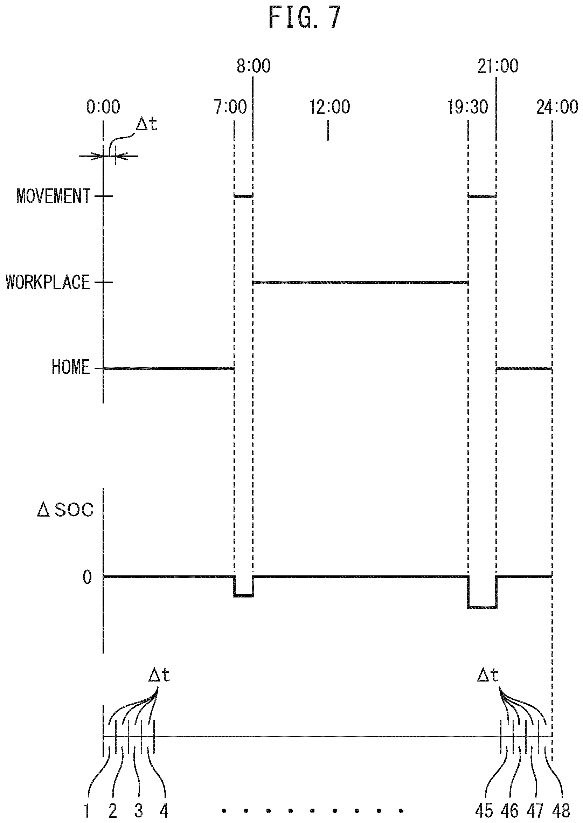

Next, how these prediction models are prepared will be explained, but to enable easy understanding of the method of preparation of these prediction models, the results of prediction trying to be obtained using these prediction models will be explained first. FIG. 7 shows one example of the results of prediction trying to be obtained using these prediction models. Note that, FIG. 7 shows the results of prediction of the state of the vehicle 1 in a 24 hour day based on 0:00, that is, the result of prediction of whether the host vehicle 1 will be moving between the home and workplace, whether it will be parked at home, or whether it will be parked at the workplace and the amount of consumption of electric power when the host vehicle 1 is moving between the home and workplace, that is, the result of prediction of the amount of change ΔSOC of the SOC amount of the battery 3.

In this regard, in the liberalized electric power market of Japan, "30 minute planned balancing" making the amount of electric power generated and the amount of electric power demanded match in 30 minute units has been mandated. Therefore, electric power has to be transferred between the host vehicle 1 and the outside in basic 30 minute units. Therefore, in the example shown in FIG. 7, a 24 hour day is equally divided by time windows Δt of the same time length (30 minutes) and, as will be understood from FIG. 7, it is predicted in standard 30 minute units if the host vehicle 1 will be moving between the home and workplace, will be parked at the home, or will be parked at the workplace. In the example shown in FIG. 7, from 9:00 pm of a prior day to 7:00 am of a following day, it is predicted that the host vehicle 1 will be parked at home, from 7:00 am to 8:00 am, it is predicted that the host vehicle 1 will be moving between the home and workplace, from 8:00 am to 7:30 pm, it is predicted that the host vehicle 1 will be parked at the workplace, and from 7:30 pm to 9:00 pm, it is predicted that the host vehicle 1 will be moving between the home and workplace.

Further, in the example shown in FIG. 7, the amount of consumption of electric power of the battery 3 of the host vehicle 1, that is, the amount of change ΔSOC of the SOC amount of the battery 3, is predicted only when it is predicted that the host vehicle 1 will be moving between the home and workplace. Note that, in the example shown in FIG. 7, the length of time of each time window Δt is made 30 minutes, but the length of time of this time window Δt may be changed along with any change of the mandatory provisions of the "30 minute planned balancing". Further, in a country other than Japan, the length of time of the time window Δt is made any length of time in accordance with the mandatory provisions of that country. Therefore, this time window Δt, if expressed comprehensively, can be said to be the same length of time obtained by equally dividing a 24 hour day.

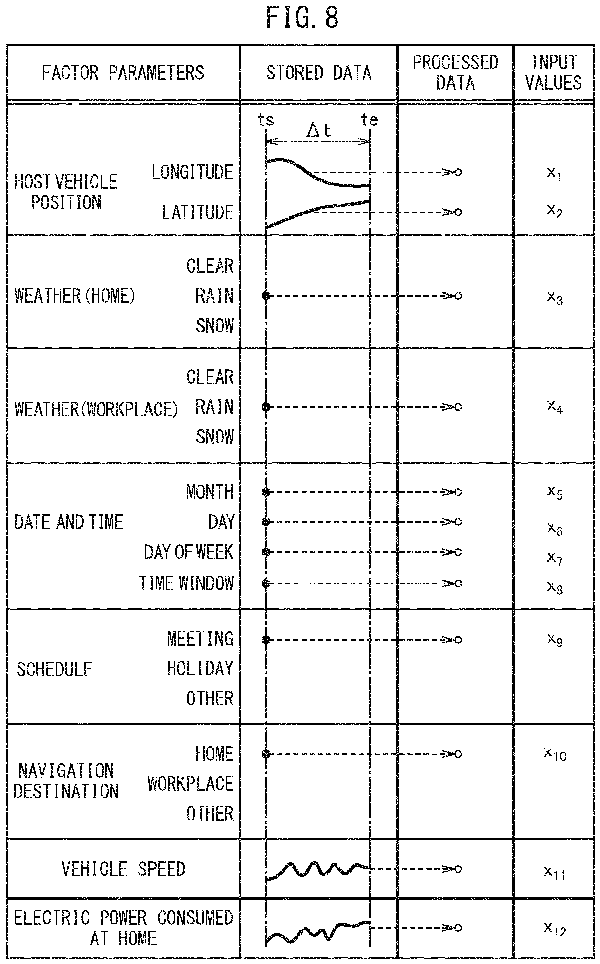

Now then, when preparing prediction models, first, the factor parameters considered to have an effect on the result of prediction of whether the host vehicle 1 will be moving between the home and workplace, whether it will be parked at home, or whether it will be parked at the workplace are determined. Next, the operation of storing data relating to these factor parameters is performed. These factor parameters and the stored data are listed in FIG. 8. If referring to FIG. 8, as the factor parameters, the position of the host vehicle 1, the weather around the home, the weather around the workplace, the date and time, the schedule at the workplace, the destination set by a passenger in the navigation device 12, the vehicle speed of the host vehicle 1, and the electric power consumed at the home are employed. Note that, in this case, as the weather around the home, it is possible to use the weather forecast for the area around the home. As the weather around the workplace, it is possible to use the weather forecast of the area around the workplace.

In this case, the position of the host vehicle 1, the weather around the home, the weather around the workplace, the date and time, and the schedule at the workplace have an effect on the parked hours at the home or workplace. Therefore, they have a large effect on the results of prediction. On the other hand, the destination set at the navigation device 12 shows where the vehicle will be parked in the future. Therefore, the destination set in the navigation device 12 has a large effect on the result of prediction of the parked location. On the other hand, if congestion arises between the home and workplace, the speed of the host vehicle 1 will fall and, as a result, the time of arrival at the home or workplace will become delayed, so the parked hours at the home or workplace will change. Therefore, the speed of the host vehicle 1 has an effect on the result of prediction of the parked hours at the home or workplace. Further, for example, while sleeping at the home, the electric power consumed at the home is small, but if a resident about to go to work starts becoming busy, the electric power consumed at the home rises. Therefore, the electric power consumed at the home becomes related with the parked hours at the home.

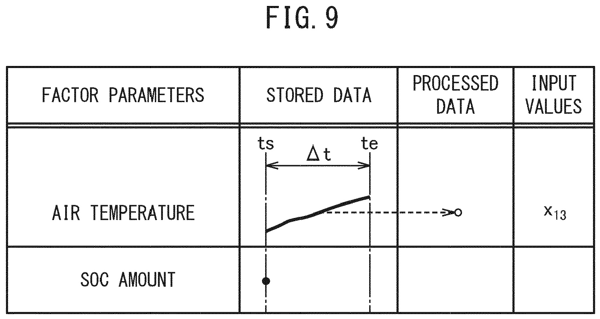

On the other hand, as the factor parameters considered to have an effect on the results of prediction of the amount of change ΔSOC of the SOC amount of the battery 3, in addition to the factor parameters listed in FIG. 8, the further two factor parameters listed in FIG. 9 are employed. That is, if the air temperature becomes higher, the cooling device of the host vehicle 1 is used, while if the air temperature becomes lower, the heating device of the host vehicle 1 is used, so the amount of consumption of electric power of the battery 3 increases. Therefore, the air temperature has a great effect on the result of prediction of the amount of change ΔSOC of the SOC amount of the battery 3. On the other hand, the SOC amount of the battery 3 being employed as a factor parameter is believed to not require explanation.

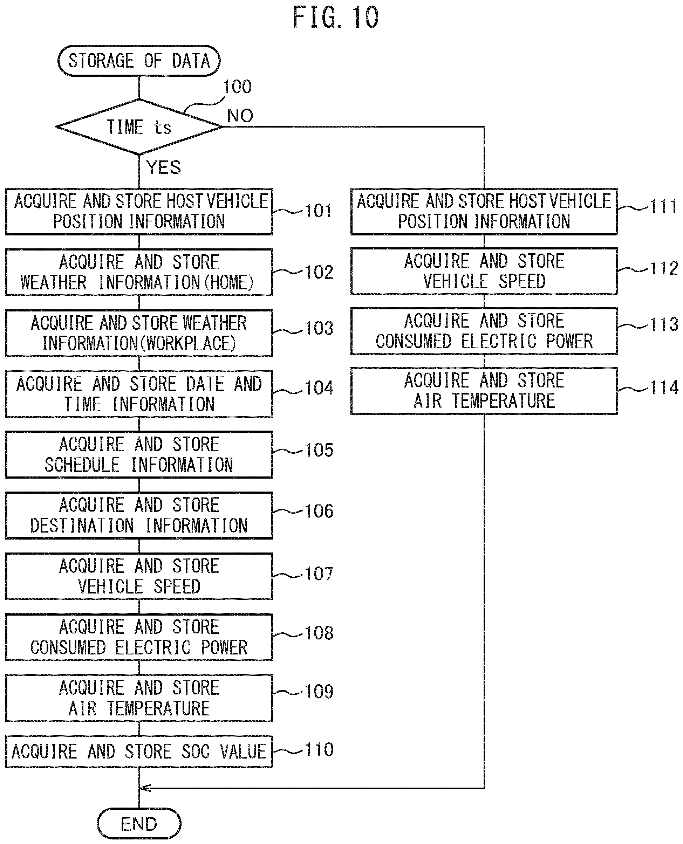

In the embodiment according to the present invention, in the server 30 (FIG. 1), the storing action of data relating to the factor parameters is performed. FIG. 10 shows the routine of storage of data performed continuously at the electronic control unit 31 of the server 30. Next, this routine of storage of data will be explained while referring to the tables shown in FIG. 8 and FIG. 9. Note that, the column of stored data in the table of FIG. 8 describes the time windows Δt shown in FIG. 7. The "ts" and "te" described in this column of stored data respectively indicate the start times and end times of the time windows Δt. Further, as shown in FIG. 7, the time windows Δt are numbered starting from 0 hour from 1 to 48. Due to this numbering, which time window Δt is concerned is specified.

The routine shown in FIG. 10 is, for example, executed every 30 seconds. Data relating to the factor parameters is successively stored in the memory 34 of the electronic control unit 31. In this case, the data relating to the factor parameters is sometimes successively sent from the communication devices 61 installed in the vehicle 1 and the personal residences A, B, and C and workplace D to the server 30. The data relating to these factor parameters is sometimes conversely fetched from the communication devices 61 installed in the vehicle 1 and the personal residences A, B, and C and workplace D. Whatever the case, due to the data storage routine shown in FIG. 10, the data relating to the factor parameters obtained is successively stored in the memory 34 of the electronic control unit 31. Note that, this operation of storage of data relating to the factor parameters is continuously performed for several years starting from 0 hour of a certain day.

Referring to FIG. 10, first, at step 100, it is judged if the current time is the start time ts of the current time window Δt. When the current time is the start time ts of the current time window Δt, the routine proceeds to step 101 where the position information of the host vehicle 1 is acquired and stored. Note that, in the electronic control unit 4 of the host vehicle 1, the current position of the host vehicle 1, that is, the longitude and latitude, is continuously calculated based on the received signals received by the GPS receiver 10 and the map data stored in the map data storage device 11. At step 101, the information relating to the longitude and latitude is acquired and stored. Next, at step 102, the weather around the home is acquired. For example, if a clear day, 1 is stored, if a rainy day, 2 is stored, and if snowing, 3 is stored. In this case, as explained above, as the weather around the home, the weather forecast for the area around the home can be used. Next, at step 103, the weather around the workplace is acquired. For example, if a clear day, 1 is stored, if a rainy day, 2 is stored, and if snowing, 3 is stored. In this case as well, as explained above, as the weather around the workplace, the weather forecast for the area around the workplace can be used.

Next, at step 104, the date and time are acquired and stored. Specifically speaking, the month, day, and day of the week (for example if Sunday, 1 is stored, if Monday, 2 is stored...) and the number of the time window Δt are acquired and stored. Next, at step 105, the schedule at the workplace is acquired. For example, during the time window Δt, if a meeting, 1 is stored, if a holiday, 2 is stored, and if otherwise, 3 is stored. Next, at step 106, the destination set in the navigation device 12 is acquired. For example, if the destination is the home, 1 is stored, if the destination is the workplace, 2 is stored, and if otherwise, 3 is stored. Next, at step 107, the speed of the vehicle 1 is acquired and stored. Next, at step 108, the electric power consumed at the home is acquired and stored. This electric power consumed at the home is calculated in the electric power supply and demand control device 60. Next, at step 109, the air temperature is acquired and stored. Next, at step 110, the SOC amount of the battery 3 is acquired and stored.

On the other hand, if at step 100 it is judged that the current time is not the start time ts of the current time window Δt, the routine proceeds to step 111 where the position information of the host vehicle 1 is acquired and stored. Next, at step 112, the speed of the vehicle 1 is acquired and stored. Next, at step 113, the electric power consumed at the home is acquired and stored. Next, at step 114, the air temperature is acquired and stored. Therefore, as will be understood from the columns of stored data in the tables of FIG. 8 and FIG. 9, for the weather around the home, the weather around the workplace, the date and time, the schedule at the workplace, the destination set in the navigation device 12, and the SOC amount of the battery 3, only the data at the start time ts of the current time window Δt is acquired and stored. For the position information of the host vehicle 1, the speed of the vehicle 1, the electric power consumed at the home, and the air temperature, the data at every other 30 seconds from the start time ts to the end time te of the current time window Δt is acquired and stored.

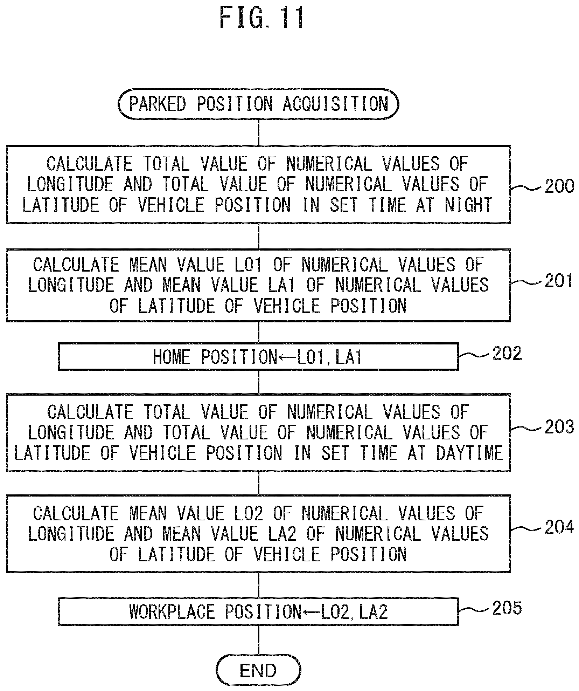

If the data relating to the factor parameters is stored in the memory 34 of the electronic control unit 31, the position information of the host vehicle 1 in the stored factor parameters is used to acquire the parked position of the host vehicle 1. FIG. 11 shows the routine for acquisition of the parked position of the host vehicle 1 executed in the electronic control unit 31 of the server 30. Referring to FIG. 11, first, at step 200, the total value of the numerical values of the longitudes of the host vehicle positions and the total value of the numerical values of the latitudes within set hours of the night, for example, 0 am to 5 am, are calculated. Next, at step 201, the mean value LO1 of the numerical values of the longitudes of the host vehicle positions and the mean values LA1 of the numerical values of the latitudes are calculated. Usually, at night, the host vehicle 1 will be parked at home. Therefore, at step 201, the mean value LO1 of the numerical values of the longitudes of the host vehicle positions and the mean values LA1 of the numerical values of the latitudes are made the longitude and latitude of the home position.

Next, at step 203, the total value of the numerical values of the longitudes of the host vehicle positions and the total value of the numerical values of the latitudes within the set hours of the day, for example, 11 am to 4 pm, are calculated. Next, at step 204, the mean value LO2 of the numerical values of the longitudes of the host vehicle positions and the mean values LA2 of the numerical values of the latitudes are calculated. Usually, at the daytime, the host vehicle 1 will be parked at the workplace. Therefore, at step 205, the mean value LO2 of the numerical values of the longitudes of the host vehicle positions and the mean values LA2 of the numerical values of the latitudes are made the longitude and latitude of the workplace.

Now then, as explained above, in the embodiment of the present invention, a prediction model predicting whether the host vehicle 1 will be moving between the home and workplace, whether it will be parked at home, or whether it will be parked at the workplace and a prediction model predicting about how much electric power will be consumed when the host vehicle 1 moves between the home and workplace are prepared. There are several techniques for preparing these prediction models, but below the case of using a neural network to prepare the prediction models will be used as example to first explain the method of preparing a prediction model predicting whether the host vehicle 1 will be moving between the home and workplace, whether it will be parked at home, or whether it will be parked at the workplace and to next explain the method of preparing a prediction model predicting about how much electric power will be consumed when the host vehicle 1 moves between the home and workplace.

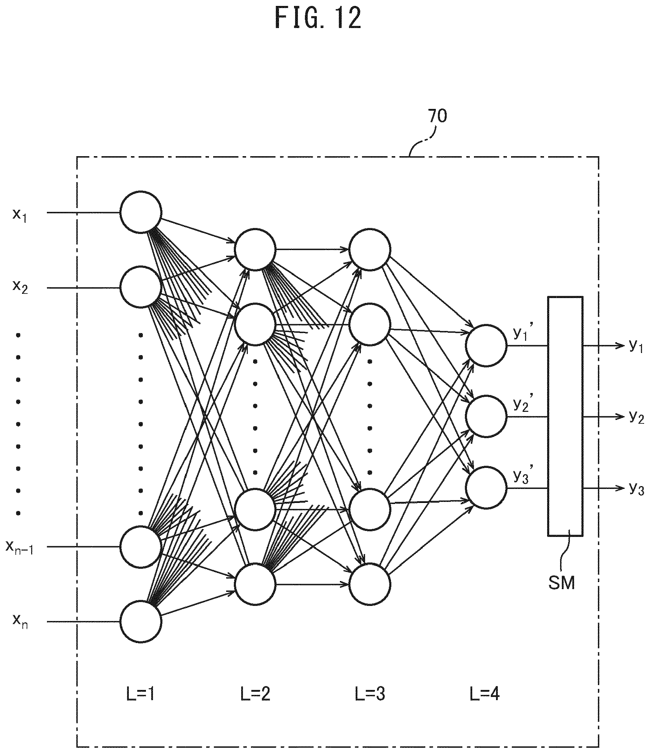

FIG. 12 shows a neural network 70 used for preparing a prediction model predicting whether the host vehicle 1 will be moving between the home and workplace, whether it will be parked at home, or whether it will be parked at the workplace. Referring to FIG. 12, the circle marks indicate artificial neurons. In the neural network 70, the artificial neurons are usually called "nodes" or "units" (in the present application, called "nodes"). Note that, in FIG. 12, L=1 shows an input layer, L=2 and L=3 show hidden layers, and L=4 shows an output layer. x₁, x₂, ... xₙ₋₁, xₙ show input values to nodes of the input layer (L=1). Further, in the example shown in FIG. 12, there are two hidden layers (L=2, L=3), but there may be any number of hidden layers (L=2, L=3). On the other hand, in this embodiment, there are three nodes of the output layer ( L=4). The output values from the nodes of the output layer (L=4) are shown by y1', y2', y3'. These output values y1', y2', y3' are sent into a softmax layer SM where they are converted to the respectively corresponding output values y1, y2, y3. The total of these output values y1, y2, y3 is 1, while the output values y1, y2, y3 show the ratios with respect to 1.

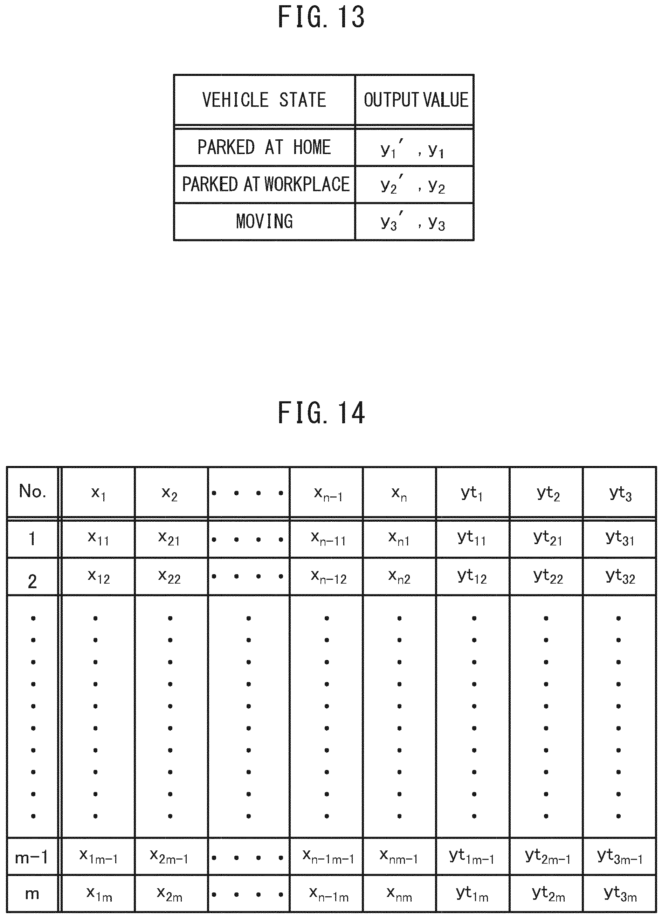

Now then, as the input values x1, x2, ... xₙ₋₁, xₙ of the neural network 70, data obtained by partially processing the stored data of the factor parameters in the time window Δt shown in FIG. 8 is used. The processed data of the factor parameters will be explained later. On the other hand, FIG. 13 shows a table of which vehicle states the output values y1', y2', y3' and output values y1, y2, y3 shown in FIG. 12 express. As will be understood from FIG. 13, the output value y1' and output value y1 show that the host vehicle 1 will be parked at the home, the output value y2' and output value y2 show that the host vehicle 1 will be parked at the workplace, and the output value y3' and output value y3 show when the host vehicle 1 will be moving. In the embodiment according to the present invention, the weights of the neural network 70 are trained so that if inputting the processed data of the factor parameters to the nodes of the input layer (L=1), the output value y1 showing the time when the host vehicle 1 will be parked at the home, the output value y2 showing the time when the host vehicle 1 will be parked at the workplace, or the output value y3 showing the host vehicle 1 will be moving is output.

FIG. 14 shows a training data set prepared using the input values x1, x2, ... xₙ₋₁, xₙ and teacher data, that is, truth labels yt. In this FIG. 14, for the input values x₁, x₂, ... xₙ₋₁, xₙ, as explained above, processed data of the factor parameters is used. On the other hand, in FIG. 14, yt1, yt2, yt3 respectively show the output values y1', y2', y3' shown in FIG. 12 and training data for the output values y1, y2, y3, that is, truth labels. That is, in FIG. 14, yt1 shows the truth label when the host vehicle 1 will be parked at home, yt2 shows the truth label when the host vehicle 1 will be parked at the workplace, and yt3 shows the truth label when the host vehicle 1 will be moving. In this case, for example, when the host vehicle 1 will be parked at home, only the truth label yt1 is made 1 and the remaining truth labels yt2, yt3 are all made zero. Similarly, when the host vehicle 1 will be parked at the workplace, only the truth label yt2 is made 1 and the remaining truth labels yt₁, yt₃ are all made zero, while when the host vehicle 1 will be moving, only the truth label yt3 is made 1 and the remaining truth labels yt1, yt2 are all made zero.

On the other hand, as shown in FIG. 14, in the training data set, "m" number of data showing the relationships between the input values x1, x2, ... xₙ₋₁, xₙ and the truth labels yt are acquired. For example, the 2-th data (No. 2) lists the obtained input values x12, x22, ... xₙ₋₁₂, xₙ₂ and truth labels yt₁₂, yt₂₂, yt₃₂, while the m-1-th data (No. m-1) lists the input values x₁ₘ₋₁, x₂ₘ₋₁... xₙ₋₁ₘ₋₁, xₙₘ₋₁ of the obtained input parameters and the truth labels yt₁ₘ₋₁, yt₂ₘ₋₁, yt₃ₘ₋₁.

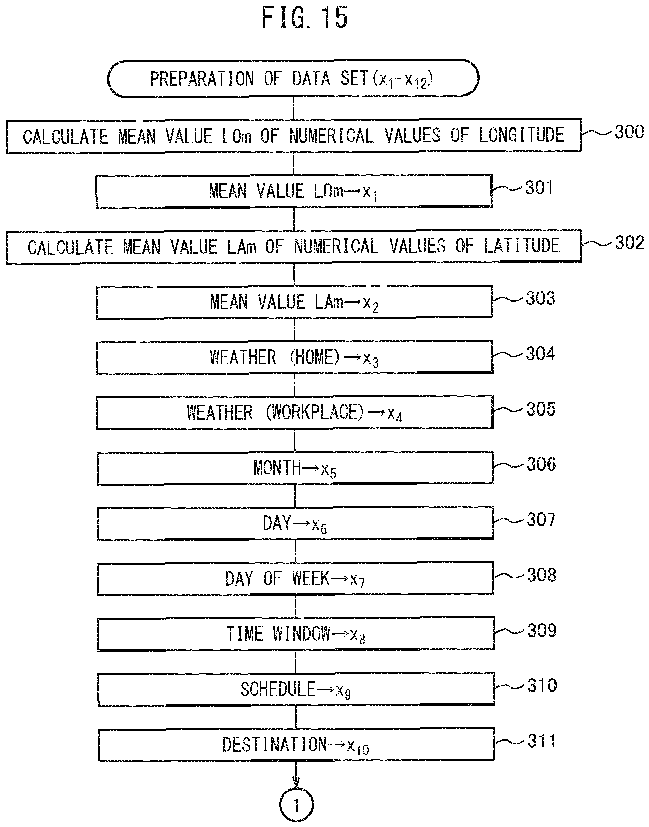

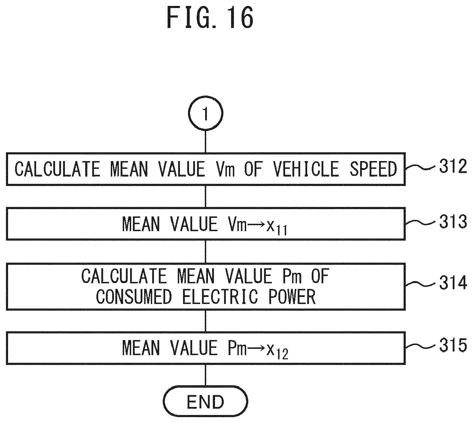

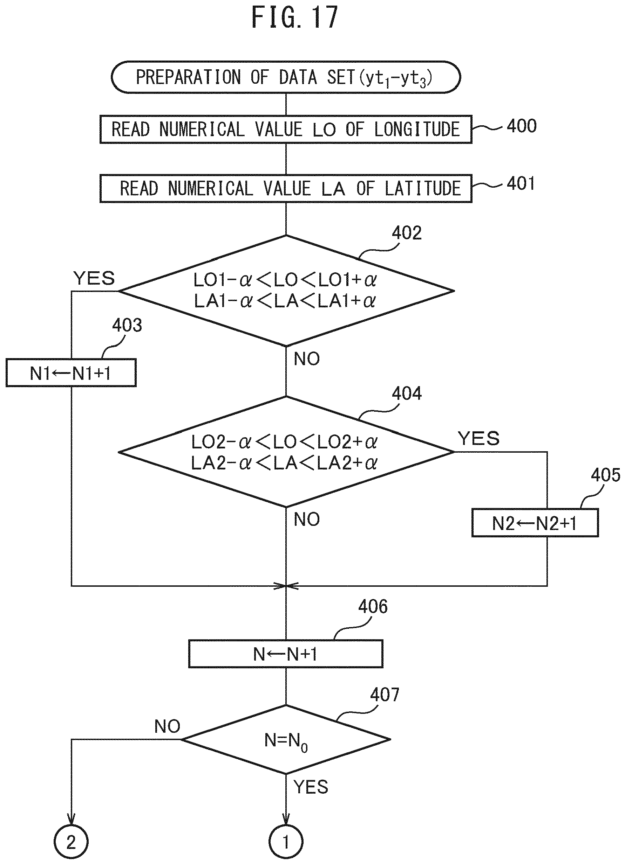

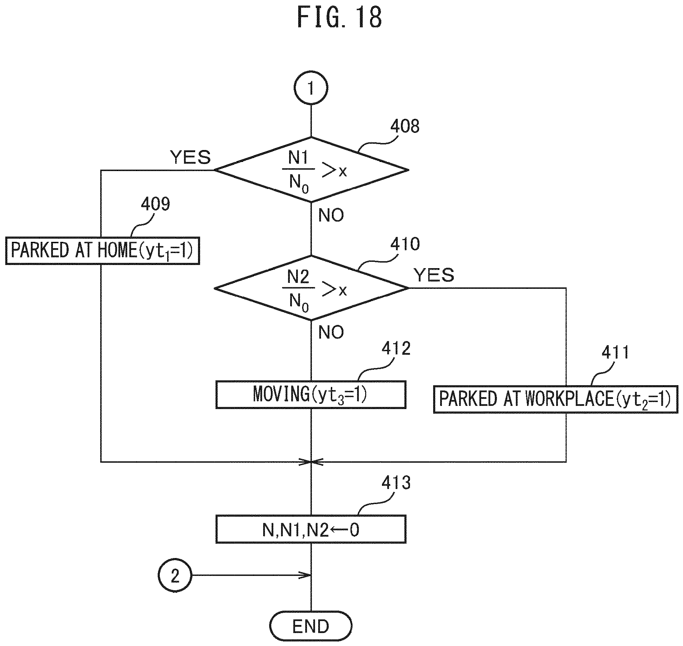

Next, while referring to FIG. 15 to FIG. 18, the routine for preparing the data set shown in FIG. 14 using the processed data of the factor parameters will be explained. Note that, FIG. 15 and FIG. 16 show flow charts for preparing the input values x1, x2, ... xₙ₋₁, xₙ, while FIG. 17 and FIG. 18 show the routine for preparing the training data, that is, the truth labels yt1, yt2, yt3. These routines are successively performed for each time window Δt using stored data stored in the memory 34 in the electronic control unit 31. Note that, FIG. 8 and FIG. 9 show the schematically represented processed data and input values. Further, in the embodiment according to the present invention, the data set is prepared in the memory 34 of the electronic control unit 31.

First, referring to FIG. 15 and FIG. 16, first, at step 300, the stored data in the time window Δt is used to calculate the mean value LOm of the numerical values of the longitudes of the host vehicle positions in the time window Δt. Next, at step 301, the mean value LOm of the numerical values of the longitudes of the host vehicle positions is made the input value x1 and is stored in the corresponding column of the data set. Next, at step 302, the stored data in the time window Δt is used to calculate the mean value LAm of the numerical values of the latitudes of the host vehicle positions in the time window Δt. Next, at step 303, the mean value LAm of the numerical values of the latitudes of the host vehicle positions is made the input value x2 and is stored in the corresponding column of the data set. Next, at step 304, using the stored data in the time window Δt, the number showing the weather around the home at the start time ts of the time window Δ is made the input value x3 and is stored in the corresponding column of the data set.

Next, at step 305, using the stored data in the time window Δt, the number showing the weather around the workplace at the start time ts of the time window Δ is made the input value x4 and is stored in the corresponding column of the data set. Next, at steps 306, 307, 308, and 309, using the stored data in the time window Δt, the numbers of the month, day, and day of the week and number of the time window Δt are respectively made the input values x5, x6, x7, xg and are stored in the corresponding column of the data set. Next, at step 310, using the stored data in the time window Δt, the number showing the schedule at the workplace in the time window Δ is made the input value x9 and is stored in the corresponding column of the data set. Next, at step 311, using the stored data in the time window Δt, the number showing the destination set at the navigation device 12 at the start time ts of the window Δ is made the input value x10 and is stored in the corresponding column of the data set.

Next, at step 312, using the stored data in the time window Δt, the mean value Vm of the speed of the host vehicle 1 in the time window Δt is calculated. Next, at step 313, the mean value Vm of the speed of the host vehicle 1 is made the input value x11 and is stored in the corresponding column of the data set. Next, at step 314, using the stored data in the time window Δt, the mean value Pm of the electric power consumed at the home in the time window Δt is calculated. Next, at step 315, the mean value Pm of the electric power consumed at the home is made the input value x12 and is stored in the corresponding column of the data set.

Next, the routine for preparing the training data, that is, the truth labels yt1, yt2, yt3, shown in FIG. 17 and FIG. 18 will be explained. This routine is successively executed for the N₀ number (N₀=60) of the data set for every 30 seconds stored in the stored data in each time window Δt. Referring to FIG. 17 and FIG. 18, first, at step 400, using the stored data in the time window Δt, the longitude LO of the vehicle position at the earliest time in the time window Δt is read. Next, at step 401, using the stored data in the time window Δt, the latitude LA of the vehicle position at the earliest time in the time window Δt is read.

Next, at step 402, it is judged whether the longitude LO of the vehicle position read at step 400 is between the value of the longitude LO1 showing the home position shown in FIG. 11 minus a certain small value α (LO1-α) and the value of the longitude LO1 showing the home position plus the certain small value α (LO1+α) and the latitude LA of the vehicle position read at step 401 is between the value of the latitude LA1 showing the home position shown in FIG. 11 minus the certain small value α (LA1-α) and the value of the latitude LA1 showing the home position plus the certain small value α (LA1+α). When LO1-α<LO<LO1+α and LA1-α<LA<LA1+α stand, it is judged that the host vehicle 1 will be parked at the home and the routine proceeds to step 403 where a count N1 is incremented by exactly 1. Next, the routine proceeds to step 406.

As opposed to this, when at step 402 it is judged that LO1-α<LO<LO1+α and LA1-α<LA<LA1+α do not stand, the routine proceeds to step 404 where it is judged whether the longitude LO of the vehicle position read at step 400 is between the value of the longitude LO2 showing the workplace position shown in FIG. 11 minus the certain small value α (LO2-α) and the value of the longitude LO2 showing the workplace position plus the certain small value α (LO2+α) and the latitude LA of the vehicle position read at step 401 is between the value of the latitude LA2 showing the workplace position shown in FIG. 11 minus the certain small value α (LA2-α) and the value of the latitude LA2 showing the workplace position plus the certain small value α (LA2+α). When LO2-α<LO<LO2+α and LA2-α<LA<LA2+α stand, it is judged that the host vehicle 1 will be parked at the workplace and the routine proceeds to step 405 where a count N2 is incremented by exactly 1. Next, the routine proceeds to step 406. As opposed to this, when at step 404 it is judged that LO2-α<LO<LO2+α and LA2-α<LA<LA2+α do not stand, the routine proceeds to step 406.

At step 406, a count N is incremented by exactly 1. Next, at step 407, it is judged if the count N reaches N₀(N₀=60). When the count N does not reach N₀, the processing cycle ends. If the processing cycle ends, at the next processing cycle, the data at the next time in the time window Δt is subjected to the processing from step 400 to step 406. The processing from step 400 to step 406 is repeated until the count N reaches N₀. If the count N reaches N₀, the routine proceeds to step 408 where it is judged if the value N1/N₀of the count N1 divided by the count N₀ is larger than a set value X, for example, 0.6. When it is judged that N1/N₀>X, it is judged that the probability is high that the host vehicle 1 will be parked at home and the routine proceeds to step 409 where the truth label yt1 is made 1 and is stored in the corresponding column of the data set. Next, the routine proceeds to step 413.

As opposed to this, when at step 408 it is judged that N1/N₀>X does not stand, the routine proceeds to step 410 where it is judged whether the value N2/N₀of the count N2 divided by the count N₀ is larger than a set value X, for example, 0.6. When N2/N₀>X stands, it is judged that the probability is high that the host vehicle 1 will be parked at the workplace and the routine proceeds to step 411 where the truth label yt2 is made 1 and is stored in the column of the corresponding data set. Next, the routine proceeds to step 413. On the other hand, when at step 410 it is judged that N2/N₀>X does not stand, it is judged that the probability is high that the host vehicle 1 will be moving and the routine proceeds to step 412 where the truth label yt3 is made 1 and is stored in the corresponding column of the data set. Next, the routine proceeds to step 413. At step 413, the counts N, N1, N2 are cleared.

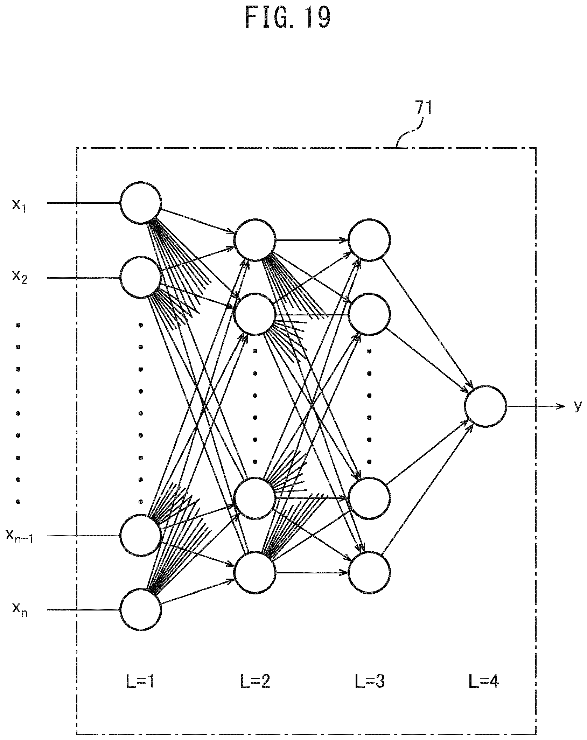

Next, the method of preparing a prediction model predicting about how much electric power will be consumed when the host vehicle 1 is moving between the home and workplace will be explained. FIG. 19 shows a neural network 71 used for preparing a prediction model predicting about how much electric power will be consumed when the host vehicle 1 is moving between the home and workplace. Referring to FIG. 19, the difference between this neural network 71 and the neural network 70 shown in FIG. 12 is just that in the neural network 71, there is a single node of the output layer (L=4) and the softmax layer SM is not provided. In this neural network 71, the output value "y" is output from the node of the output layer (L=4).

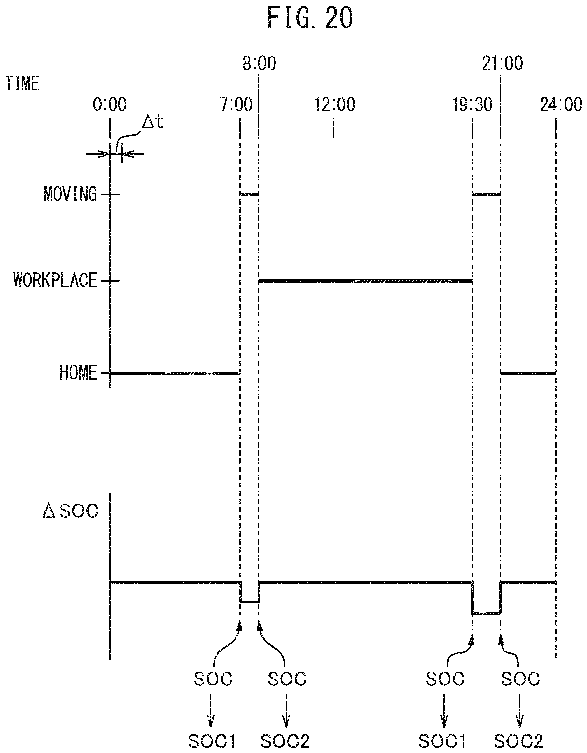

Now then, when predicting the amount of consumption of electric power when the host vehicle 1 will be moving between the home and workplace, that is, the amount of change ΔSOC of the SOC amount of the battery 3, as explained above, as the input values x1, x2, ... xₙ₋₁, xₙ of the neural network 71, in addition to the input values x1 to x12 shown in FIG. 8, an input value relating to the air temperature is used. On the other hand, the amount of change ΔSOC of the SOC amount of the battery 3 is calculated from the stored data of the SOC amount of the battery 3. This will be explained while referring to FIG. 20 showing one example of the result of prediction by a prediction model similar to FIG. 7. That is, if the time window Δ showing that the host vehicle 1 will be moving between the home and workplace is predicted by the prediction model predicting whether the host vehicle 1 will be moving between the home and workplace, whether it will be parked at home, or whether it will be parked at the workplace, as shown in FIG. 20, the SOC amount at the time of start of movement is made SOC1, the SOC amount at the time of end of movement is made SOC2, and the difference of these SOC1 and SOC2 is made the amount of change ΔSOC of the SOC amount (=SOC2-SOC1). In this case, in the embodiment according to the present invention, the weights of the neural network 71 are trained so that if inputting the input value relating to the air temperature in addition to the input values x1 to x12 shown in FIG. 8 in the nodes of the input layer (L=1), an output value "y" showing the amount of change ΔSOC of the SOC amount is output.

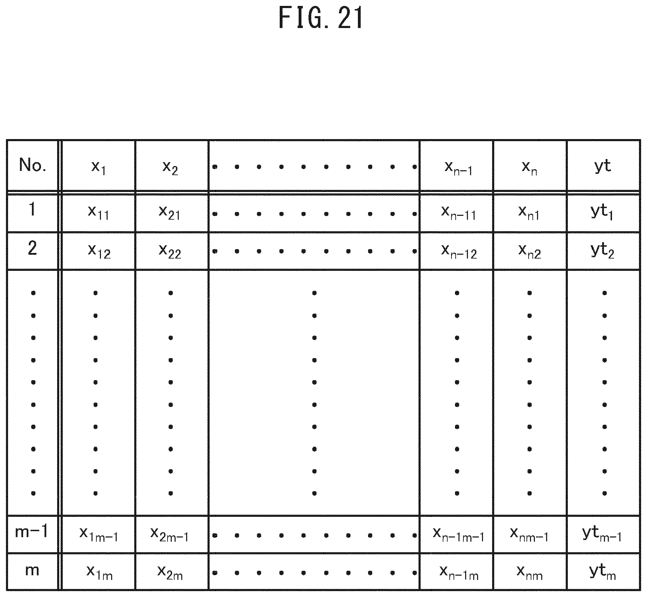

FIG. 21 shows the training data set prepared using the input values x1, x2, ... xₙ₋₁, xₙ and training data, that is, the measured values yt of the amount of change ΔSOC of the SOC amount. In the training data set as well, "m" number of data showing the relationships between the input values x1, x2, ... xₙ₋₁, xₙ and the training data, that is, the measured values yt, are acquired. For example, the 2-th data (No. 2) lists the obtained input values x12, x22, ... xₙ₋₁₂, xₙ₂ and measured value yt2. The m-1-th data (No. m-1) lists the input values x₁ₘ₋₁, x₂ₘ₋₁... xₙ₋₁ₘ₋₁, xₙₘ₋₁ of the obtained input parameters and the measured value ytₘ₋₁.

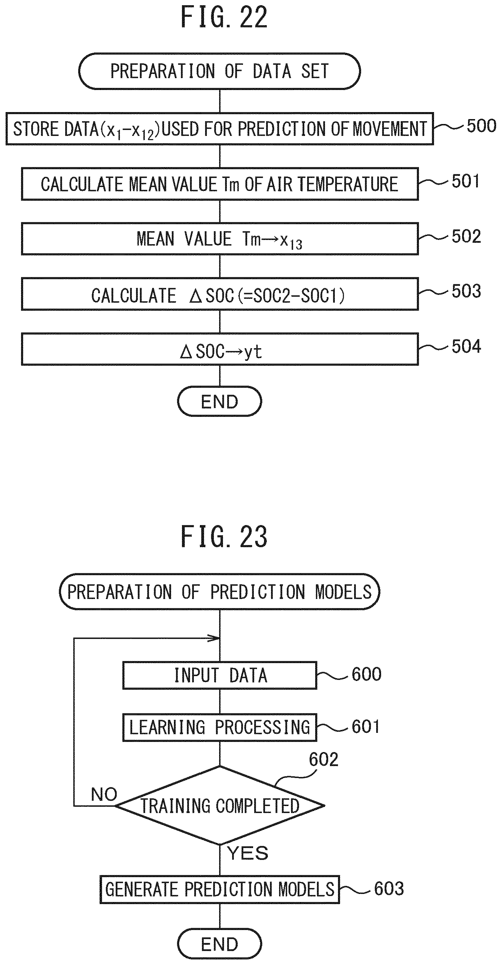

Next, referring to FIG. 22, the routine for preparing a data set shown in FIG. 21 will be explained. This routine is successively performed in the electronic control unit 31 every time window Δt using the result of prediction by the prediction model predicting whether the host vehicle 1 will be moving between the home and workplace, whether it will be parked at home, or whether it will be parked at the workplace and using the stored data stored in the memory 34. Note that, this data set is also prepared in the memory 34 of the electronic control unit 31.

Referring to FIG. 22, first, at step 500, the input values x1 to x12 of the time window Δt used when predicting that the host vehicle 1 will be moving between the home and workplace are extracted from the data set shown in FIG. 14 and the extracted input values x1 to x12 are stored in the corresponding column of the data set shown in FIG. 21. Next, at step 501, using the stored data in the time window Δt, the mean value Tm of the air temperatures in the time window Δt at which it is predicted the host vehicle 1 will be moving between the home and workplace is calculated. Next, at step 502, the mean value Tm of the air temperatures is made the input value x13 and is stored in the corresponding column of the data set.

Next, at step 503, using the stored data in the time window Δt, the amount of change ΔSOC of the SOC amount (=SOC2-SOC1) is calculated from the SOC amount SOC1 when movement starts and the SOC amount SOC2 when movement ends in the time window Δt at which it is predicted the host vehicle 1 will be moving between the home and workplace. Next, at step 504, this amount of change ΔSOC of the SOC amount is made the training data yt and is stored in the corresponding column of the data set. In this way, the data set shown in FIG. 21 is prepared.

If the data set shown in FIG. 14 is prepared, using the routine for generation of the prediction model shown in FIG. 23, a prediction model predicting whether the host vehicle 1 will be moving between the home and workplace, whether it will be parked at home, or whether it will be parked at the workplace is prepared, while if the data set shown in FIG. 21 is prepared, using the routine for generation of the prediction model shown in FIG. 23, a prediction model predicting the amount of change ΔSOC of the SOC amount is prepared. The routine for generation of the prediction models is performed in the electronic control unit 31 of the server 30.

First, if briefly explaining the case of using the routine for generation of a prediction model shown in FIG. 23 to generate the prediction model predicting whether the host vehicle 1 will be moving between the home and workplace, whether it will be parked at home, or whether it will be parked at the workplace, at step 600, data stored in the data set shown in FIG. 14 is successively read in. At step 601, the weights of the neural network 70 shown in FIG. 12 are trained. For example, at step 600, from the data set, the input values x1 to x12 in the r-th time window Δt of a certain year, month, and day and the teacher data, that is, the truth labels yt1, yt2, yt3 at the window Δt one window later, that is, the r+1-th time window Δt, are read. Next, at step 601, the cross entropy loss E showing the difference between the output values y1, y2, y3 of the neural network 70 and the truth labels yt1, yt2, yt3 is calculated, and the weights of the neural network 70 are trained by using the error backpropagation method so that the cross entropy loss E becomes smaller.

Next, at step 602, it is judged whether the weights of the neural network 70 have finished being trained for all of the data of the data set. When the weights of the neural network 70 have not finished being learned for all of the data of the data set, the routine returns to step 600 where the input values x1 to x12 in the window Δt one window later, that is, the r+1-th time window Δt, and the teacher data, that is, the truth labels yt1, yt2, yt3, in the time window Δt one window later, that is, the r+2-th time window Δt, are used to train the weights of the neural network 70 by the error backpropagation method. On the other hand, when at step 602 it is judged that the weights of the neural network 70 have finished being trained for all of the data of the data set, the routine proceeds to step 603 where the learned weights are stored. Due to this, when currently at an r-th time window Δt of a certain year, month, and day, a prediction model predicting whether the host vehicle 1 will be moving between the home and workplace, whether it will be parked at home, or whether it will be parked at the workplace in the time window Δt one window later, that is, the r+1-th time window Δt, is generated.

In the same way, if currently the r-th time window Δt of a certain year, month, and day, a prediction model predicting whether the host vehicle 1 will be moving between the home and workplace, whether it will be parked at home, or whether it will be parked at the workplace at the time window Δt two windows later, that is, the r+2-th time window Δt, is generated, next, a prediction model predicting whether the host vehicle 1 will be moving between the home and workplace, whether it will be parked at home, or whether it will be parked at the workplace at the time window Δt three windows later, that is, the r+3-th time window Δt, is generated. Next, these prediction models are used, for example, to obtain result of prediction of whether the host vehicle 1 will be moving between the home and workplace, whether it will be parked at home, or whether it will be parked at the workplace up to the time window Δt 24 hours later such as shown in FIG. 7. Therefore, from this result of prediction, it becomes possible to predict whether the host vehicle 1 will be moving between the home and workplace, whether it will be parked at home, or whether it will be parked at the workplace within 24 hours in the future.

First, if briefly explaining the case of using the routine for generation of a prediction model shown in FIG. 23 to generate a prediction model predicting the amount of change ΔSOC of the SOC amount, at step 600, data stored in the data set shown in FIG. 21 is successively read. At step 601, the weights of the neural network 71 shown in FIG. 19 are trained. For example, if it is predicted that the host vehicle 1 will be moving between the home and workplace at an s-th time window Δt of a certain year, month, and day by the prediction model predicting whether the host vehicle 1 will be moving between the home and workplace, whether it will be parked at home, or whether it will be parked at the workplace, at step 600, from the data set, the amount of change ΔSOC of the SOC amount in the s-th time window Δt of a certain year, month, and day, that is, the teacher data yt, and the input values x1 to x12 at the time window Δt one window earlier, that is, the s-1-th time window Δt, are read. Next, at step 601, the square loss E of the output values "y" of the neural network 71 and the truth labels yt is calculated, and the weights of the neural network 71 are trained by using the error backpropagation method so that the square loss E becomes smaller.

Next, at step 602, it is judged whether the weights of the neural network 71 have finished being trained for all of the data of the data set. When the weights of the neural network 71 have not finished being learned for all of the data of the data set, the routine returns to step 600 where the amount of change ΔSOC of the SOC amount. that is, the training data yt, in the next k-th time window Δt of a certain year, month, and day after the s-th time window Δt of a certain year, month, and day, and the input values x1 to x12 in the time window Δt one window earlier, that is, the k-1-th time window Δt, are read. Next, at step 601, the square loss E between the output values "y" of the neural network 71 and the truth labels yt is calculated, and the weights of the neural network 71 are trained by using the error backpropagation method so that the square loss E becomes smaller. On the other hand, when at step 602 it is judged that the weights of the neural network 71 have finished being trained for all of the data of the data set, the routine proceeds to step 603 where the learned weights are stored. Due to this, a prediction model predicting the amount of change ΔSOC of the SOC amount in the time window Δt at which it is predicted the host vehicle 1 will be moving between the home and workplace when currently at a time window Δt one window before the time window Δt at which it is predicted the host vehicle 1 will be moving between the home and workplace is generated.

In the same way, a prediction model predicting the amount of change ΔSOC of the SOC amount in the time window Δt at which it is predicted the host vehicle 1 will be moving between the home and workplace when currently at a time window Δt two windows before the time window Δt at which it is predicted the host vehicle 1 will be moving between the home and workplace is generated. Next, a prediction model predicting the amount of change ΔSOC of the SOC amount in the time window Δt at which it is predicted the host vehicle 1 will be moving between the home and workplace when currently at a time window Δt three windows before the time window Δt at which it is predicted the host vehicle 1 will be moving between the home and workplace is generated. Next, these prediction models are used, for example, to obtain results of prediction predicting the amount of change ΔSOC of the SOC amount in the time window Δt at which it is predicted the host vehicle 1 will be moving between the home and workplace among the time windows Δt up to 24 hours later such as for example shown in FIG. 7. Therefore, from this result of prediction, it becomes possible to predict the amount of change ΔSOC of the SOC amount in the time window Δt at which it is predicted the host vehicle 1 will be moving between the home and workplace within 24 hours in the future.

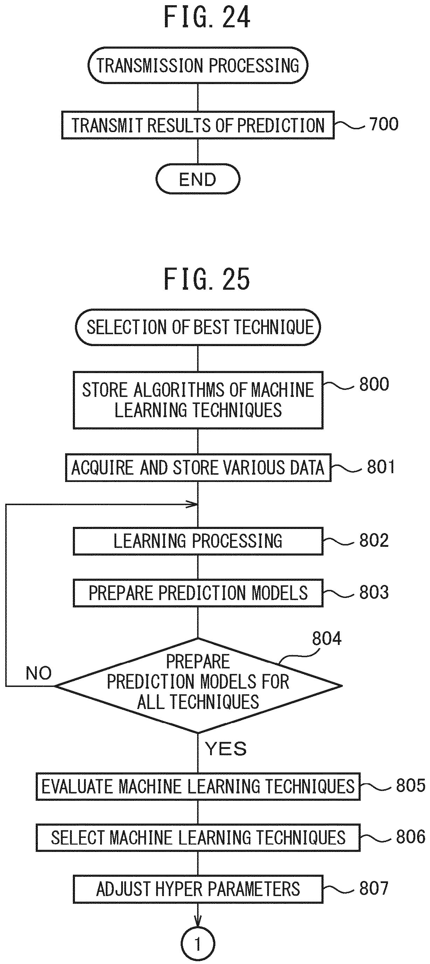

If, in this way, the result of prediction predicting whether the host vehicle 1 will be moving between the home and workplace, whether it will be parked at home, or whether it will be parked at the workplace within 24 hours in the future and the result of prediction predicting the amount of change ΔSOC of the SOC amount in the time window Δt at which it is predicted the host vehicle 1 will be moving between the home and workplace within 24 hours in the future are obtained, as shown at step 700 of FIG. 24, these results of prediction are, for example, sent to the host vehicle 1 every 30 minutes and are displayed on the display screen 13 of the operating device 14 mounted in the host vehicle 1. Therefore, a passenger of the host vehicle 1 can predict from these results of prediction about when the host vehicle 1 will be moving between the home and workplace, it will be parked at home, or it will be parked at the workplace and can predict about how much electric power will be consumed when the host vehicle 1 moves between the home and workplace, so it is possible to suitably perform a sales transaction of the electric power.

In this way, according to the present invention, a vehicle state prediction model trained so that if at least three pieces of information including position information of the vehicle, information relating to the weather, and information relating to the date and time are input, a result of prediction of whether the vehicle will enter a vehicle state able to transfer electric power with the outside is output is stored. Whether the vehicle will enter a vehicle state able to transfer electric power with the outside is predicted by inputting the above mentioned at least three pieces of information, that is, position information of the vehicle, information relating to the weather, and information relating to the date and time into the vehicle state prediction model. In this case, the information relating to the weather includes weather forecasts.

In this case, this vehicle state prediction model forms a learned model for vehicle state prediction. Therefore, in the embodiment according to the present invention, there is provided a leaned model for a vehicle state prediction which is trained so that if at least three pieces of information including position information of the vehicle, information relating to weather, and information relating to a date and time are inputted, a result of prediction of whether the vehicle will enter a vehicle state able to transfer electric power with the outside is output, and which causes a computer to output a result of prediction of whether the vehicle will enter a vehicle state able to transfer electric power with the outside if the above mentioned at least three pieces of information are inputted. In this case as well, information relating to the weather includes weather forecasts. In addition, in this case, this leaned model may be stored in ,for example, a portable type storage medium such as CD-ROM, DVD-ROM etc. This is the same as in the hereinafter mentioned other leaned models.

Further, in the embodiment according to the present invention, there is provided a program and a computer-readable storage medium storing this program that causes a computer to:
acquire at least three pieces of information including position information of the vehicle, information relating to weather, and information relating to a date and time,
input the acquired at least three pieces of information into a vehicle state prediction model trained so that if the above mentioned at least three pieces of information are input, a result of prediction of whether the vehicle will enter a vehicle state able to transfer electric power with the outside is output, and
output the result of prediction of whether the vehicle will enter a vehicle state able to transfer electric power with the outside from said vehicle state prediction model.

In this case as well, information relating to the weather includes weather forecasts. In addition, in this case, as this storage medium, for example, a portable type storage medium such as CD-ROM, DVD-ROM etc. may be used. This is the same as in the hereinafter mentioned other storage mediums.

On the other hand, in the embodiment according to the present invention, when the vehicle will be parked at a parked location able to transfer electric power with the outside, the vehicle will enter a state able to transfer electric power with the outside. The above-mentioned stored vehicle state prediction model is comprised of a park prediction model trained so that if the above-mentioned at least three pieces of information are inputted, a result of prediction of whether the vehicle will be parked at a parked location able to transfer electric power is output. Whether the vehicle will be parked at a parked location able to transfer electric power is predicted by inputting the above mentioned at least three pieces of information into this park prediction model. In this case as well, information relating to the weather includes weather forecasts.

Further, in the embodiment according to the present invention, the above-mentioned park prediction model is trained so as to output a parked location able to transfer electric power in which it is predicted that the vehicle will be parked and a predicted hours at which the vehicle will be parked at the predicted parked location able to transfer electric power. The parked location able to transfer electric power in which the vehicle will be parked and hours at which the vehicle will be parked are predicted by inputting the above mentioned at least three pieces of information into the park prediction model.

Further, in the embodiment according to the present invention, there is provided a leaned model for a vehicle state prediction which is trained so that if at least three pieces of information including position information of the vehicle, information relating to weather, and information relating to a date and time are inputted, a parked location able to transfer electric power in which it is predicted that the vehicle will be parked and predicted hours at which the vehicle will be parked at the predicted parked location able to transfer electric power are outputted, and which causes a computer to output a parked location able to transfer electric power in which the vehicle will be parked and hours at which the vehicle will be parked if the above mentioned at least three pieces of information are inputted.

Further, in the embodiment according to the present invention, there is provided a program and a computer-readable storage medium storing this program that causes a computer to:
acquire at least three pieces of information including position information of the vehicle, information relating to weather, and information relating to a date and time,
input the acquired at least three pieces of information into a vehicle state prediction model trained so that if the above mentioned at least three pieces of information are inputted, a parked location able to transfer electric power in which it is predicted that the vehicle will be parked and predicted hours at which the vehicle will be parked at the predicted parked location are output, and
output the predicted parked location and the predicted hours from the vehicle state prediction model.

Further, in the embodiment according to the present invention, an SOC prediction model trained so as to output a predicted amount of change of an SOC value of a battery of the vehicle arising due to movement of the vehicle between the above-mentioned parked locations able to transfer electric power is stored. An amount of change of the SOC value arising due to movement of the vehicle between the parked locations able to transfer electric power is predicted by inputting at least three pieces of information including position information of the vehicle, information relating to weather, and information relating to the date and time into this SOC prediction model.

Further, in the embodiment according to the present invention, there is provided a leaned model for an SOC prediction which is trained so that if at least three pieces of information including position information of the vehicle, information relating to weather, and information relating to a date and time are inputted, a predicted amount of change of an SOC value of a battery of the vehicle arising due to movement of the vehicle between the parked locations able to transfer electric power is outputted, and which causes a computer to output an amount of change of the SOC value arising due to movement of the vehicle between the parked locations able to transfer electric power if the above mentioned at least three pieces of information are inputted.

Further, in the embodiment according to the present invention, there is provided a program and a computer-readable storage medium storing this program that causes a computer to:
acquire at least three pieces of information including position information of the vehicle, information relating to weather, and information relating to a date and time,
input the acquired at least three pieces of information into an SOC prediction model trained so that if the above mentioned at least three pieces of information are inputted, a predicted amount of change of an SOC value of a battery of the vehicle arising due to movement of the vehicle between parked locations able to transfer electric power is output, and
output the predicted amount of change of an SOC value of the battery of the vehicle arising due to movement of the vehicle between the parked locations able to transfer electric power from the SOC prediction model.

Further, in the embodiment according to the present invention, a 24 hour day is equally divided by time windows of the same time lengths, the above-mentioned park prediction model is trained so as to output results of prediction of whether the vehicle will be parked at the parked location able to transfer electric power for every divided time window, and whether the vehicle will be parked at the parked location able to transfer electric power is predicted by inputting the position information of the vehicle, information relating to the weather, and information relating to the date and time into the park prediction model. In this case, in one embodiment of the present invention, the length of time of each time window is made 30 minutes. In this case as well, information relating to the weather includes weather forecasts.

Further, in the embodiment according to the present invention, the above-mentioned park prediction model is trained so as to output results of prediction of whether the vehicle will be parked at the parked location able to transfer electric power or whether the vehicle will be moving between the parked locations able to transfer electric power for every divided time window. An SOC prediction model trained so as to output a predicted amount of change of an SOC value of a battery of the vehicle arising due to movement of the vehicle between the parked locations able to transfer electric power is stored, and an amount of change of the SOC value arising due to movement of the vehicle between the parked locations able to transfer electric power is predicted by inputting at least three pieces of information including position information of the vehicle, information relating to weather, and information relating to the date and time into the SOC prediction model. In this case as well, information relating to the weather includes weather forecasts.

Further, in the embodiment according to the present invention, the vehicle enters a state able to transfer electric power with the outside when the vehicle is parked at home or workplace, and the above-mentioned stored vehicle state prediction model is comprised of a vehicle state prediction model trained so that if at least three pieces of information including position information of the vehicle, information relating to the weather, and information relating to the date and time are inputted, a result of prediction of whether the vehicle will be parked at the home, whether the vehicle will be parked at the workplace or whether the vehicle will be moving between the home and workplace is output. Whether the vehicle will be parked at the home, whether the vehicle will be parked at the workplace, or whether the vehicle will be moving between the home and workplace is predicted by inputting the above mentioned at least three pieces of information into this vehicle state prediction model. In this case as well, information relating to the weather includes weather forecasts.

Further, in the embodiment according to the present invention, there is provided a leaned model which is trained so that if at least three pieces of information including position information of the vehicle, information relating to weather, and information relating to a date and time are input, a result of prediction of whether the vehicle will be parked at the home, whether the vehicle will be parked at the workplace or whether the vehicle will be moving between the home and workplace is output, and which causes a computer to output a result of prediction of whether the vehicle will be parked at the home, whether the vehicle will be parked at the workplace, or whether the vehicle will be moving between the home and workplace is predicted if the above mentioned at least three pieces of information are inputted.

Further, in the embodiment according to the present invention, there is provided a program and a computer-readable storage medium storing this program that causes a computer to:
acquire at least three pieces of information including position information of the vehicle, information relating to weather, and information relating to a date and time,
input the acquired at least three pieces of information into a vehicle state prediction model trained so that if the above mentioned at least three pieces of information are input, a result of prediction of whether the vehicle will be parked at the home, whether the vehicle will be parked at the workplace or whether the vehicle will be moving between the home and workplace is output, and
output the result of prediction of whether the vehicle will be parked at the home, whether the vehicle will be parked at the workplace or whether the vehicle will be moving between the home and workplace from the vehicle state prediction model.

Further, in the embodiment according to the present invention, as the input information of the above-mentioned vehicle state prediction model, in addition to the position information of the vehicle, information relating to the weather, and information relating to the date and time, schedule information at workplace, destination information in a navigation system mounted in the vehicle, speed information of the vehicle, and consumed electric power information at home are used. In this case as well, information relating to the weather includes weather forecasts.

Now then, a prediction model predicting whether the host vehicle 1 will be moving between the home and workplace, whether it will be parked at home, or whether it will be parked at the workplace can be generated by different machine learning techniques. As the machine learning techniques able to generate this prediction model, in addition to the machine learning technique using a neural network such as explained up to here, for example, other machine learning techniques using random forest, logistic regression, the K nearest neighbor algorithm, gradient boosting, etc. are widely known. In this case, among these machine learning techniques, it is extremely difficult to determine in advance the technique with the highest precision while observing the restrictions of the calculation time. Therefore, in the second embodiment according to the present invention, in the server 30 (FIG. 1), the best machine learning technique is selected from among the various different machine learning techniques.

FIG. 25 shows the routine for selection of the best technique performed by the electronic control unit 31 of the server 30 for working this second embodiment. Referring to FIG. 25, first, at step 800, algorithms of machine learning techniques using a neural network, random forest, logistic regression, K nearest neighbor algorithm, and gradient boosting are stored in the memory 34 of the electronic control unit 31. Next, at step 801, data is acquired using the routine shown in FIG. 10 and the data set shown in FIG. 14 is stored in the memory 34 of the electronic control unit 31. Next, at step 802, machine learning processing by each of the machine learning techniques using the neural network, random forest, logistic regression, K nearest neighbor algorithm, or gradient boosting is performed. Next, at step 803, prediction models are prepared.

Next, at step 804, it is judged if the machine learning processing by all of the machine learning techniques has been finished. When the machine learning processing by all of the machine learning techniques has not been finished, the routine returns to step 802 where machine learning processing by the next machine learning technique is performed. Next, when at step 804 it is judged that the machine learning processing by all of the machine learning techniques has been finished, the routine proceeds to step 805 where each machine learning technique is evaluated. For example, verification data is input to the prediction models obtained by the machine learning processing according to the machine learning techniques and the machine learning techniques are evaluated based on evaluation values showing the degrees of accuracy, reproduction rates, precisions, etc. of the results of prediction obtained by the prediction models and the calculation times. Next, at step 806, machine learning techniques with high evaluations are selected. Next, at step 807, hyper parameters of the selected machine learning techniques are adjusted. Next, at step 808, machine learning processing according to each machine learning technique selected and adjusted in hyper parameters is performed. Next, at step 809, prediction models are prepared.

Next, at step 810, it is judged if the machine learning processing by all of the machine learning techniques selected and adjusted in hyper parameters has been finished. When the machine learning processing by all of the machine learning techniques has not been finished, the routine returns to step 808 where the machine learning processing by the next machine learning technique is performed. Next, when at step 810 it is judged that the machine learning processing by all of the machine learning techniques selected and adjusted in hyper parameters has been finished, the routine proceeds to step 811 where the machine learning techniques are evaluated. For example, as explained above, verification data is input to the prediction models obtained by the machine learning processing according to the machine learning techniques and the machine learning techniques are evaluated based on evaluation values showing the degrees of accuracy, reproduction rates, precisions, etc. of the results of prediction obtained by the prediction models and the calculation times. Next, at step 812, the machine learning technique with the highest evaluation is selected as the best machine learning technique. Next, at step 813, machine learning processing by this best machine learning technique is used to prepare the best prediction model.

In this way, in the second embodiment, as the above-mentioned vehicle state prediction model, a plurality of prediction models generated by different machine learning techniques are prepared, evaluation values of these plurality of prediction models are verified by using verification data, and the prediction model with the highest evaluation value among these plurality of prediction models is employed as the vehicle state prediction model.

In this regard, in the first embodiment shown in FIG. 7 to FIG. 24, as shown in FIG. 7, the states of the host vehicle 1 are classified into the three states of a moving state of movement between the home and workplace, a home parked state showing parking at the home, and a workplace parked state showing parking at the workplace. What state the state of the host vehicle 1 is in is solved as a problem of classification into three classes. In such a multiclass classification problem, if in the case where the number of data is extremely small, that is, in the case where there is an imbalance in the number of data, there is a danger of training becoming difficult. In the case shown in the first embodiment, in the hours of one day, there are few hours in the moving state. Therefore, there is a danger of training becoming difficult. As a first method for avoiding the danger of training becoming difficult in this way, there are the method of thinning the data relating to the home parked state or the data relating to the workplace parked state (random under sampling) and the method of randomly replicating data relating to the moving state (up sampling), while as a second method, there is the method of constructing a first prediction model binary classifying states into the moving state and stationary state (home parked state and workplace parked state) and a second prediction model binary classifying the states into the home parked state and workplace parked state for the hours where the stationary state is predicted.

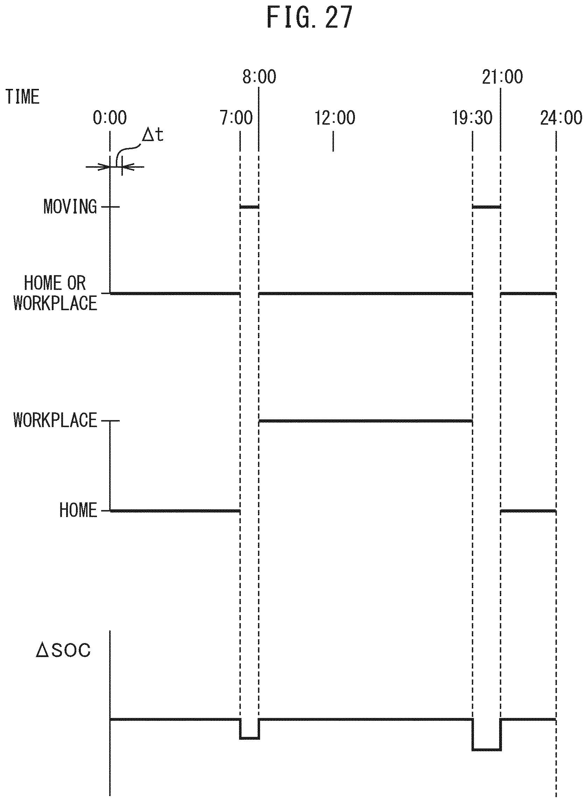

In the third embodiment according to the present invention, if there is no danger of learning becoming difficult, the states are classified into three classes shown in the first embodiment, while if there is a danger of the learning becoming difficult, the above-mentioned second method is used. Next, this third embodiment will be explained while referring to FIG. 27 to FIG. 30. FIG. 27 shows one example of a result of prediction by a prediction model similar to FIG. 7. In the third embodiment shown in FIG. 27 as well, a 24 hour day is equally divided by time windows Δt of the same time lengths (30 minutes). On the other hand, in this third embodiment, as will be understood from the topmost figure in FIG. 27, first, first prediction is performed as to whether the state of the host vehicle 1 is a moving state or a stationary state (home parked state and workplace parked state) based on 30 minute reference units.

If the first prediction of whether the state of the host vehicle 1 will be the moving state or a stationary state (home parked state and workplace parked state) is finished, next, as will be understood from the middle figure in FIG. 27, second prediction of whether the stationary state (home parked state and workplace parked state) will be the home parked state or will be the workplace parked state is performed. Further, in this third embodiment as well, as will be understood from the bottommost figure of FIG. 27, the amount of consumption of electric power of the battery 3 of the host vehicle 1, that is, the amount of change ΔSOC of the SOC amount of the battery 3 is predicted only when it is predicted that the state of the host vehicle 1 will be the moving state.

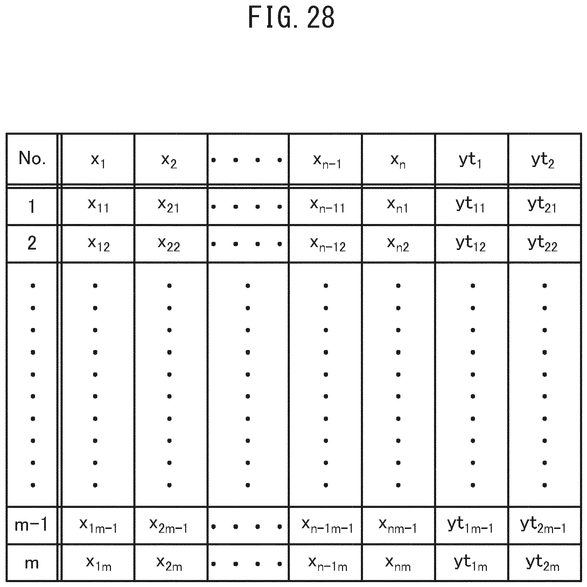

FIG. 28 shows the training data set used when these first prediction and second prediction are performed. In FIG. 28, the input values x1, x2, ... xₙ₋₁, xₙ are the same as the input values x1, x2, ... xₙ₋₁, xₙ in the training data set shown in FIG. 14. On the other hand, in FIG. 28, yt1, yt2 show training data, that is, truth labels. That is, when the first prediction is performed, yt1 shows the truth label when the state of the host vehicle 1 is, for example, a stationary state (home parked state and workplace parked state) while yt2 shows the truth label when the state of the host vehicle 1 is the moving state. In this case, when the state of the host vehicle 1 is the stationary state (home parked state and workplace parked state), the truth label yt1 is made 1 and the remaining truth label yt2 is made zero. Similarly, when the state of the host vehicle 1 is the moving state, the truth label yt2 is made 1 and the truth label yt1 is made zero.

On the other hand, when the second prediction is performed, yt1 shows the truth label when the state of the host vehicle 1 is, for example, the home parked state, while yt2 shows the truth label when the state of the host vehicle 1 is the workplace parked state. In this case, when the state of the host vehicle 1 is the home parked state, the truth label yt1 is made 1 and the truth label yt2 is made zero. Similarly, when the state of the host vehicle 1 is the workplace parked state, the truth label yt2 is made 1 and the truth label yt1 is made zero.

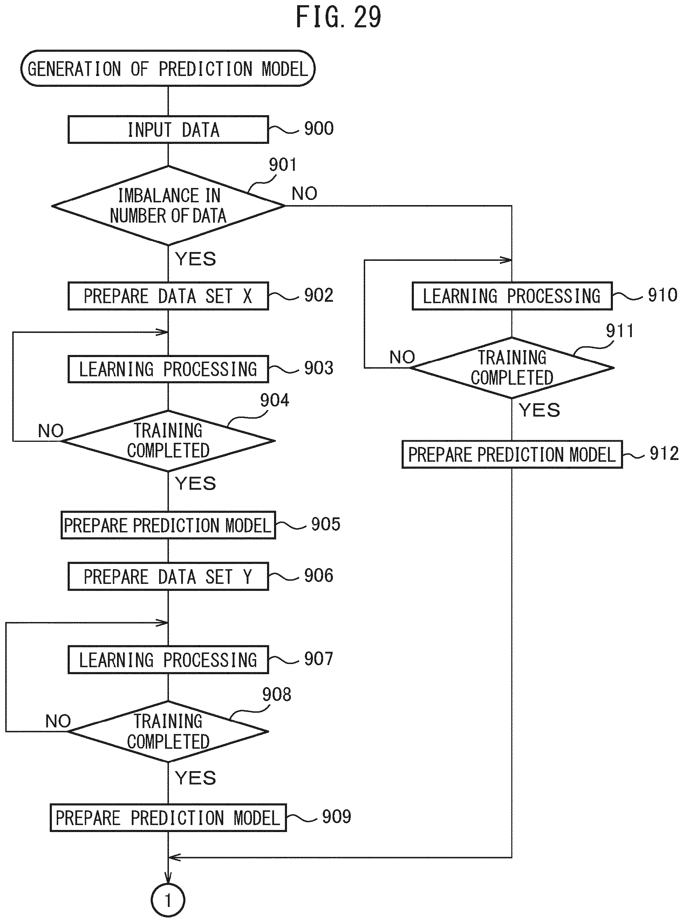

FIG. 29 and FIG. 30 show the routine for generation of a prediction model performed in the electronic control unit 31 of the server 30 for working the third embodiment. Referring to FIG. 29, first, at step 900, data stored in the data set shown in FIG. 14 is read. Next, at step 901, it is judged if there is an imbalance in the number of data stored in the data set shown in FIG. 14. If it is judged that there is an imbalance in the number of data, the routine proceeds to step 902 where data set X of the form shown in FIG. 28 is prepared. As the input values x1, x2, ... xₙ₋₁, xₙ in this data set X, the input values x1, x2, ... xₙ₋₁, xₙ of the data set shown in FIG. 14 are used as they are.

On the other hand, the training data, that is, the truth label yt1 in the data set X is made 1 when either of the truth label yt1 (when home parked state, yt1=1) and truth label yt2 (when workplace parked state, yt2=1) of the data set shown in FIG. 14 is 1. As opposed to this, the training data, that is, the truth label yt2 in the data set X is made 1 when the truth label yt₃of the data set shown in FIG. 14 (when moving state, yt3=1) is 1. That is, the truth label yt1 in the data set X is made 1 when the state of the host vehicle 1 is the stationary state (home parked state and workplace parked state), while the truth label yt2 in the data set X is made 1 when the state of the host vehicle 1 is the moving state.

Next, at step 903, the weights of the neural network are trained in the same way as the training of the weights of the neural network 70 performed at step 601 of the routine for generation of a prediction model shown in FIG. 23 in the first embodiment. For example, from the data set X, the input values x1 to x12 in the r-th time window Δt of a certain year, month, and day and the training data, that is, the truth labels yt1, yt2, in the next time window Δt, that is, the r+1-th time window Δt, are read. Next, the weights of the neural network are trained by using the error backpropagation method so that the difference between the output values y1, y2 of the neural network and the truth labels yt1, yt2 becomes smaller. Next, at step 904, it is judged if the weights of the neural network have finished being learned for all of the data of the data set X. When the weights of the neural network have not finished being learned for all of the data of the data set X, the routine returns to step 903 where the input values x1 to x12 at the next time window Δt, that is, the r+1-th time window Δt, and the training data, that is, the truth labels yt1, yt2, at the next time window Δt, that is, the r+2-th time window Δt, are used to train the weights of the neural network using the error backpropagation method.

In this way, a first prediction model predicting whether the state of the host vehicle 1 will be a stationary state (home parked state and workplace parked state) or the state of the host vehicle 1 will be a moving state in the next time window Δt, that is, the r+1-th time window Δt, if currently at an r-th time window Δt of a certain year, month, and day is generated. In the same way, a first prediction model predicting whether the state of the host vehicle 1 will be the stationary state (home parked state and workplace parked state) or the state of the host vehicle 1 will be the moving state at the time window Δt two windows later, that is, the r+2-th time window Δt if currently at an r-th time window Δt of a certain year, month, and day is generated. Next, a first prediction model predicting whether the state of the host vehicle 1 will be a stationary state (home parked state and workplace parked state) or whether the state of the host vehicle 1 will be a moving state at a time window Δt three windows later, that is, the r+3-th time window Δt, is generated. In this way, as described in step 905, all of the first prediction models are prepared.

Next, at step 906, data set Y of the form shown in FIG. 28 is prepared. As the input values x1, x2, ... xₙ₋₁, xₙ in this data set Y, the input values x1, x2, ... xₙ₋₁, xₙ of the data set shown in FIG. 14 are used as they are. On the other hand, the training data, that is, the truth label yt1 in the data set Y is made 1 when the truth label yt1 of the data set shown in FIG. 14 (when the home parked state, yt1=1) is 1. As opposed to this, the training data, that is, the truth label yt2 in the data set Y is made 1 when the truth label yt2 of the data set shown in FIG. 14 (when workplace parked state, yt2=1) is 1. That is, the truth label yt1 in the data set Y is made 1 when the state of the host vehicle 1 is the home parked state while the truth label yt2 in the data set Y is made 1 when the state of the host vehicle 1 is the workplace parked state.

Next, at step 907, the weights of the neural network are trained so as to enable prediction of whether the state of the host vehicle 1 will be the home parked state or will be the workplace parked state at a time window Δt when the state of the host vehicle 1 is the stationary state (home parked state and workplace parked state). For example, from the data set Y, the input values x1 to x12 at the r-th time window Δt of a certain year, month, and day and the training data, that is, the truth labels yt1, yt2 at the next time window Δt, that is, the r+1-th time window Δt are read. Next, the weights of the neural network are trained by using the error backpropagation method so that the difference between the output values y1, y2 of the neural network and the truth labels yt1, yt2 becomes smaller. However, in this case, if the state of the host vehicle 1 at the r+1-th time window Δt is the moving state, the input values and truth labels are not read and the weights of the neural network are not trained. Next, at step 908, it is judged whether the weights of the neural network have finished being trained for all data of the data set Y. When the weights of the neural network have not finished being trained for all data of the data set Y, the routine returns to step 907 where the input values x1 to x12 at the next time window Δt, that is, the r+1-th time window Δt, and the training data, that is, the truth labels yt1, yt2 at the next time window Δt, that is, the r+2-th time window Δt are used to train the weights of the neural network using the error backpropagation method. In this case as well, if the state of the host vehicle 1 is the moving state at the r+2-th time window Δt, the input values and truth labels are not read and the weights of the neural network are not trained.

In this way, a second prediction model predicting whether the state of the host vehicle 1 will be the home parked state or will be the workplace parked state at the r+1-th time window Δt in case where the present time is in an r-th time window Δt of a certain year, month, and day and the state of the host vehicle 1 at the next time window Δt, that is, the r+1-th time window Δt, is the stationary state is generated. In the same way, a second prediction model predicting whether the state of the host vehicle 1 will be the home parked state or will be the workplace parked state at the r+2-th time window Δt in case where the present time is in an r-th time window Δt of a certain year, month, and day and the state of the host vehicle 1 at the time window Δt two windows later, that is, the r+2-th time window Δt is the stationary state is generated. Next, a second prediction model predicting whether the state of the host vehicle 1 at the r+3-th time window Δt will be the home parked state or will be the workplace parked state in case where the present time is in an r-th time window Δt of a certain year, month, and day and the state of the host vehicle 1 at the time window Δt three windows later, that is, the r+3-th time window Δt, is the stationary state is generated. In this way, all of the second prediction models are prepared as described at step 909.

Next, the first prediction models and the second prediction models are used to obtain the results of prediction of whether the host vehicle 1 will be moving between the home and workplace, will be parked at home, or will be parked at the workplace, for example, in the time window Δt up to 24 hours later as shown in FIG. 7. Therefore, from this result of prediction, it becomes possible to predict whether the host vehicle 1 will be moving between the home and workplace, will be parked at home, or will be parked at the workplace within 24 hours in the future.

If the first prediction models and the second prediction models are prepared, the routine proceeds to step 913 where a data set Z in the form shown in FIG. 21 for generating a prediction model predicting the amount of change ΔSOC of the SOC amount is prepared. The data set Z is the same as the data set used in the first embodiment. As the input values x1, x2, ... xₙ₋₁, xₙ of the neural network, in addition to the input values x1 to x12 shown in FIG. 8, an input value relating to the air temperature is used. On the other hand, at step 914, a method the same as the first embodiment is used to train the weights of the neural network. When at step 915 it is judged that the weights of the neural network have finished being trained for all of the data of the data set Z, the routine proceeds to step 916 where the learned weights of the neural network are stored. Due to this, in the same way as the first embodiment, a prediction model predicting the amount of change ΔSOC of the SOC amount in the time window Δt at which it is predicted the host vehicle 1 will be moving between the home and workplace is generated.

On the other hand, when at step 901 it is judged that there is no imbalance in the number of data stored in the data set shown in FIG. 14, the routine proceeds to step 910 where the weights of the neural network 70 shown in FIG. 12 are trained by a method the same as the first embodiment based on the data set shown in FIG. 14. When at step 911 it is judged that the weights of the neural network 70 shown in FIG. 12 have finished being trained for all of the data of the data set, the routine proceeds to step 912 where the learned weights are stored. Due to this, in the same way as the first embodiment, a prediction model predicting whether the host vehicle 1 will be moving between the home and workplace, whether it will be parked at the home, or whether it will be parked at the workplace is generated. Next, the routine proceeds to step 913.

In this way, in the third embodiment, when the vehicle is parked at the home or workplace, the vehicle enters a state able to transfer electric power with the outside, the stored vehicle state prediction model includes a first prediction model trained so that if at least three pieces of information including position information of the vehicle, information relating to weather, and information relating to a date and time are input, a result of prediction of whether the vehicle will be parked at either of the home and workplace or whether the vehicle will be moving between the home and workplace is output, and whether the vehicle will be parked at either the home or workplace or whether the vehicle will be moving between the home and workplace is predicted by inputting the above mentioned at least three pieces of information into the first prediction model. Further the stored vehicle state prediction model includes a second prediction model trained using the result of prediction of the first prediction model so that if the above-mentioned at least three pieces of information are input, a result of prediction of whether the vehicle will be parked at home or whether the vehicle will be parked at the workplace is output, and whether the vehicle will be parked at the home or whether the vehicle will be parked at the workplace is predicted by inputting the above mentioned at least three pieces of information into the second prediction model. Note that, in this case as well, information relating to the weather includes weather forecasts.

Further, in the embodiment according to the present invention, there is provided a leaned model including a first leaned model and a second leaned model.

This first leaned model is trained so that if at least three pieces of information including position information of the vehicle, information relating to weather, and information relating to a date and time are input, a result of prediction of whether the vehicle will be parked at either of the home and workplace or whether the vehicle will be moving between the home and workplace is output, and this first leaned model causes a computer to output a result of prediction of whether the vehicle will be parked at either the home or workplace or whether the vehicle will be moving between the home and workplace if the above mentioned at least three pieces of information are inputted.

On the other hand, this second prediction mode is trained using the result of prediction of the first prediction model so that if the above mentioned at least three pieces of information are input when the first prediction model outputs a result of prediction that the vehicle will be parked at either of the home and workplace, a result of prediction of whether the vehicle will be parked at home or whether the vehicle will be parked at the workplace is output, and this second leaned model causes a computer to output a result of prediction of whether the vehicle will be parked at the home or whether the vehicle will be parked at the workplace is predicted if the above mentioned at least three pieces of information are inputted.

Further, in the embodiment according to the present invention, there is provided a program including a first program and a second program and a computer-readable storage medium storing this program including the first program and the second program.

This first program causes a computer to
acquire at least three pieces of information including position information of the vehicle, information relating to weather, and information relating to a date and time,
input the acquired at least three pieces of information into a first prediction model trained so that if the above mentioned at least three pieces of information are inputted, a result of prediction of whether the vehicle will be parked at either of the home and workplace or whether the vehicle will be moving between the home and workplace is output, and
output a result of prediction of whether the vehicle will be parked at either of the home and workplace or whether the vehicle will be moving between the home and workplace from the first prediction model,

On the other hand, this second program causes a computer to
acquire the above mentioned at least three pieces of information,
input the acquired at least three pieces of information into a second prediction model trained so that if the above mentioned at least three pieces of information are inputted when the first prediction model outputs a result of prediction that the vehicle will be parked at either of the home and workplace, a result of prediction of whether the vehicle will be parked at home or whether the vehicle will be parked at the workplace is output, and
output a result of prediction of whether the vehicle will be parked at home or whether the vehicle will be parked at the workplace from the second prediction model.

## Claims

1. A device for prediction of a vehicle state predicting whether a vehicle will enter a vehicle state able to transfer electric power with an outside,
a vehicle state prediction model trained so that if at least three pieces of information including position information of the vehicle, information relating to weather, and information relating to a date and time are inputted, a result of prediction of whether the vehicle will enter a vehicle state able to transfer electric power with the outside is output is stored, and
whether the vehicle will enter a vehicle state able to transfer electric power with the outside is predicted by inputting said at least three pieces of information into the vehicle state prediction model.

2. The device for prediction of a vehicle state according to claim 1, wherein when the vehicle is parked at one of any parked locations able to transfer electric power with the outside, the vehicle enters a state able to transfer electric power with the outside, the stored vehicle state prediction model is comprised of a park prediction model trained so that if said at least three pieces of information are inputted, a result of prediction of whether the vehicle will be parked at said parked location able to transfer electric power is output, and whether the vehicle will be parked at said parked location able to transfer electric power is predicted by inputting said at least three pieces of information into the park prediction model.

3. The device for prediction of a vehicle state according to claim 2, wherein said park prediction model is trained so as to output a parked location able to transfer electric power in which it is predicted that the vehicle will be parked and a predicted hours at which the vehicle will be parked at the predicted parked location able to transfer electric power, and a parked location able to transfer electric power in which the vehicle will be parked and hours at which the vehicle will be parked are predicted by inputting said at least three pieces of information into said park prediction model.

4. The device for prediction of a vehicle state according to claim 2, wherein an SOC prediction model trained so as to output a predicted amount of change of an SOC value of a battery of the vehicle arising due to movement of the vehicle between said parked locations able to transfer electric power is stored, and an amount of change of the SOC value arising due to movement of the vehicle between said parked locations able to transfer electric power is predicted by inputting said at least three pieces of information into the SOC prediction model.

5. The device for prediction of a vehicle state according to claim 2, wherein a 24 hour day is equally divided by time windows of the same time lengths, the park prediction model is trained so as to output results of prediction of whether the vehicle will be parked at said parked location able to transfer electric power for every divided time window, and whether the vehicle will be parked at said parked location able to transfer electric power is predicted by inputting said at least three pieces of information into the park prediction model.

6. The device for prediction of a vehicle state according to claim 5, wherein the park prediction model is trained so as to output results of prediction of whether the vehicle will be parked at said parked location able to transfer electric power or whether the vehicle will be moving between said parked locations able to transfer electric power for every divided time window, an SOC prediction model trained so as to output a predicted amount of change of an SOC value of a battery of the vehicle arising due to movement of the vehicle between said parked locations able to transfer electric power is stored, and an amount of change of the SOC value arising due to movement of the vehicle between said parked locations able to transfer electric power is predicted by inputting said at least three pieces of information into the SOC prediction model.

7. The device for prediction of a vehicle state according to claim 5, wherein the length of time of each time window is 30 minutes.

8. The device for prediction of a vehicle state according to claim 1, wherein the vehicle enters a state able to transfer electric power with the outside when the vehicle is parked at home or workplace, the stored vehicle state prediction model is comprised of a vehicle state prediction model trained so that if said at least three pieces of information are input, a result of prediction of whether the vehicle will be parked at the home, whether the vehicle will be parked at the workplace or whether the vehicle will be moving between the home and workplace is output, and whether the vehicle will be parked at the home, whether the vehicle will be parked at the workplace, or whether the vehicle will be moving between the home and workplace is predicted by inputting said at least three pieces of information into the vehicle state prediction model.

9. The device for prediction of a vehicle state according to claim 1, wherein the vehicle enters a state able to transfer electric power with the outside when the vehicle is parked at the home or workplace, the stored vehicle state prediction model includes a first prediction model trained so that if said at least three pieces of information are input, a result of prediction of whether the vehicle will be parked at either of the home and workplace or whether the vehicle will be moving between the home and workplace is output, whether the vehicle will be parked at either the home or workplace or whether the vehicle will be moving between the home and workplace is predicted by inputting said at least three pieces of information into the first prediction model, further the stored vehicle state prediction model includes a second prediction model trained using the result of prediction of the first prediction model so that if said at least three pieces of information are input, a result of prediction of whether the vehicle will be parked at home or whether the vehicle will be parked at the workplace is output, and whether the vehicle will be parked at the home or whether the vehicle will be parked at the workplace is predicted by inputting said at least three pieces of information into the second prediction model.

10. The device for prediction of a vehicle state according to claim 1, wherein as the vehicle state prediction model, a plurality of prediction models generated by different machine learning techniques are prepared, evaluation values of these plurality of prediction models are verified by using verification data, and the prediction model with the highest evaluation value among these plurality of prediction models is employed as the vehicle state prediction model.

11. The device for prediction of a vehicle state according to claim 1, wherein as the input information of the vehicle state prediction model, in addition to the position information of the vehicle, information relating to the weather, and information relating to the date and time, schedule information at workplace, destination information in a navigation system mounted in the vehicle, speed information of the vehicle, and consumed electric power information at home are used.

12. A program that causes a computer to:
acquire at least three pieces of information including position information of the vehicle, information relating to weather, and information relating to a date and time,
input the acquired at least three pieces of information into a vehicle state prediction model trained so that if said at least three pieces of information are input, a result of prediction of whether the vehicle will enter a vehicle state able to transfer electric power with the outside is output, and
output a result of prediction of whether the vehicle will enter a vehicle state able to transfer electric power with the outside from said vehicle state prediction model.

13. A program that causes a computer to:
acquire at least three pieces of information including position information of the vehicle, information relating to weather, and information relating to a date and time,
input the acquired at least three pieces of information into a vehicle state prediction model trained so that if said at least three pieces of information are inputted, a parked location able to transfer electric power in which it is predicted that the vehicle will be parked and predicted hours at which the vehicle will be parked at the predicted parked location are output, and
output the predicted parked location and the predicted hours from said vehicle state prediction model.

14. A program that causes a computer to:
acquire at least three pieces of information including position information of the vehicle, information relating to weather, and information relating to a date and time,
input the acquired at least three pieces of information into a vehicle state prediction model trained so that if said at least three pieces of information are input, a result of prediction of whether the vehicle will be parked at the home, whether the vehicle will be parked at the workplace or whether the vehicle will be moving between the home and workplace is output, and
output a result of prediction of whether the vehicle will be parked at the home, whether the vehicle will be parked at the workplace or whether the vehicle will be moving between the home and workplace from said vehicle state prediction model.

15. A program that causes a computer to:
acquire at least three pieces of information including position information of the vehicle, information relating to weather, and information relating to a date and time,
input the acquired at least three pieces of information into an SOC prediction model trained so that if said at least three pieces of information are inputted, a predicted amount of change of an SOC value of a battery of the vehicle arising due to movement of the vehicle between parked locations able to transfer electric power is output, and
output the predicted amount of change of an SOC value of the battery of the vehicle arising due to movement of the vehicle between the parked locations able to transfer electric power from said SOC prediction model.

16. A program including:
a first program that causes a computer to
acquire at least three pieces of information including position information of the vehicle, information relating to weather, and information relating to a date and time,
input the acquired at least three pieces of information into a first prediction model trained so that if said at least three pieces of information are inputted, a result of prediction of whether the vehicle will be parked at either of the home and workplace or whether the vehicle will be moving between the home and workplace is output, and
output a result of prediction of whether the vehicle will be parked at either of the home and workplace or whether the vehicle will be moving between the home and workplace from said first prediction model, and
a second program that causes a computer to
acquire said at least three pieces of information,
input the acquired at least three pieces of information into a second prediction model trained so that if said at least three pieces of information are inputted when said first prediction model outputs a result of prediction that the vehicle will be parked at either of the home and workplace, a result of prediction of whether the vehicle will be parked at home or whether the vehicle will be parked at the workplace is output, and
output a result of prediction of whether the vehicle will be parked at home or whether the vehicle will be parked at the workplace from said second prediction model.
